# EUROPEAN PATENT SPECIFICATION

(11) **EP 4 278 686 B1**
(45) Date of publication and mention of the grant of the patent: **14.05.2025**
(21) Application number: 22708634.5
(22) Date of filing: 14.01.2022
(51) Int. Cl.: H04W 36/00, H04W 36/36

(54) **CO-EXISTENCE OF INTER-SN AND INTRA-SN CPC**
KOEXISTENZ VON INTER-SN UND INTRA-SN CPC
COEXISTENCE ENTRE INTER-SN ET INTRA-SN CPC

(30) Priority: 14.01.2021 US 202163137426 P
(43) Date of publication of application: 22.11.2023
(73) Proprietor: Telefonaktiebolaget LM Ericsson (publ), 164 83 Stockholm (SE)
(72) Inventor: DA SILVA, Icaro Leonardo, 170 77 Solna (SE); EKLÖF, Cecilia, 187 41 Täby (SE); MULLER, Julien, 35700 Rennes (FR)
(74) Representative: Ericsson
(86) International application number: PCT/SE2022/050035
(87) International publication number: WO 2022/154735

(56) References cited:
- US-A1- 2020 396 661
- NEC: "Expected signalling flows for SN-initiated PSCell change", vol. RAN WG2, no. Reno, USA; 20191118 - 20191122, 8 November 2019 (2019-11-08), XP051817109, Retrieved from the Internet <URL:https://ftp.3gpp.org/tsg_ran/WG2_RL2/TSGR2_108/Docs/R2-1915243.zip R2-1915243_CPC-flows.docx> [retrieved on 20191108]
- POTEVIO: "Conditional PSCell addition and change in MR-DC", vol. RAN WG2, no. electronic; 20200817 - 20200828, 7 August 2020 (2020-08-07), XP051912463, Retrieved from the Internet <URL:https://ftp.3gpp.org/tsg_ran/WG2_RL2/TSGR2_111-e/Docs/R2-2007839.zip R2-2007839 Conditional PSCell addition and change in MR-DC.docx> [retrieved on 20200807]
- CATT: "Summary of [Post111-e][920][eDCCA] Conditional PSCell Change and Addition (CATT)", vol. RAN WG2, no. Electronic; 20201102 - 20201113, 23 October 2020 (2020-10-23), XP051942321, Retrieved from the Internet <URL:https://ftp.3gpp.org/tsg_ran/WG2_RL2/TSGR2_112-e/Docs/R2-2009360.zip R2-2009360 post111-e920eDCCA Conditional PSCell Change and Addition(CATT).docx> [retrieved on 20201023]
- "3rd Generation Partnership Project; Technical Specification Group Radio Access Network; Evolved Universal Terrestrial Radio Access (E-UTRA) and NR; Multi-connectivity; Stage 2 (Release 16)", vol. RAN WG2, no. V16.4.0, 6 January 2021 (2021-01-06), pages 1 - 84, XP051999626, Retrieved from the Internet <URL:https://ftp.3gpp.org/Specs/archive/37_series/37.340/37340-g40.zip 37340-g40.docx> [retrieved on 20210106]

## Description

### TECHNICAL FIELD

This disclosure relates to the co-existence of inter-secondary node (SN) and intra-SN Conditional PSCell Change (CPC) and Conditional PSCell Addition/Change (CPAC), and in particular to methods and apparatus relating to wireless devices, Source SNs (S-SNs), Target-SNs (T-SNs) and Master Nodes (MNs).

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

### 3GPP Dual Connectivity

In 3GPP Rel-12, the LTE feature Dual Connectivity (DC) was introduced, to enable the UE to be connected in two cell groups, each controlled by an LTE access node, eNBs, labelled as the Master eNB, MeNB and the Secondary eNB, SeNB. The UE still only has one RRC connection with the network. In 3GPP, the Dual Connectivity (DC) solution has since then been evolved and is now also specified for NR as well as between LTE and NR. Multi-connectivity (MC) is the case when there are more than 2 nodes involved. With introduction of 5G, the term MR-DC (Multi-Radio Dual Connectivity, see also 3GPP TS 37.340) was defined as a generic term for all dual connectivity options which includes at least one NR access node. Using the MR-DC generalized terminology, the UE is connected in a Master Cell Group (MCG), controlled by the Master Node (MN), and in a Secondary Cell Group (SCG) controlled by a Secondary Node (SN).

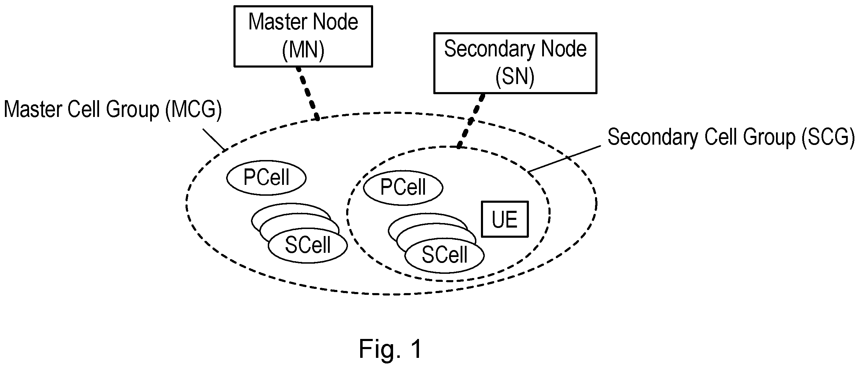

Further, in MR-DC, when dual connectivity is configured for the UE, within each of the two cell groups, MCG and SCG, carrier aggregation may be used as well. In this case, within the Master Cell Group, MCG, controlled by the master node (MN), the UE may use one PCell and one or more SCell(s). And within the Secondary Cell Group, SCG, controlled by the secondary node (SN), the UE may use one Primary SCell (PSCell, also known as the primary SCG cell in NR) and one or more SCell(s). This combined case is illustrated in Figure 1. In particular, Figure 1 illustrates dual connectivity combined with carrier aggregation in MR-DC. In NR, the primary cell of a master or secondary cell group is sometimes also referred to as the Special Cell (SpCell). Hence, the SpCell in the MCG is the PCell and the SpCell in the SCG is the PSCell.

There are different ways to deploy 5G network with or without interworking with LTE (also referred to as E-UTRA) and evolved packet core (EPC). In principle, NR and LTE can be deployed without any interworking, denoted by NR stand-alone (SA) operation, also known as Option 2, that is gNB in NR can be connected to 5G core network (5GC) and eNB in LTE can be connected to EPC with no interconnection between the two, also known as Option 1.

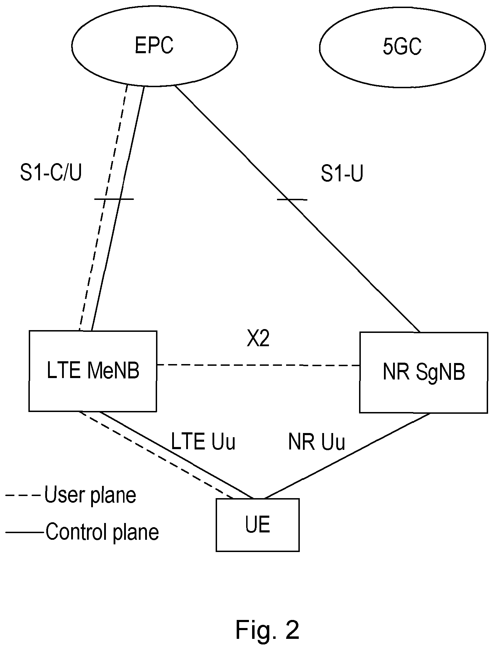

On the other hand, the first supported version of NR uses dual connectivity, denoted as EN-DC (E-UTRAN-NR Dual Connectivity), also known as Option 3, as depicted in Figure 2. In such a deployment, dual connectivity between NR and LTE is applied, where the UE is connected with both the LTE radio interface (LTE Uu in the figure) to an LTE access node and the NR radio interface (NR Uu in the figure) to an NR access node. Further, in EN-DC, the LTE access node acts as the master node (in this case known as the Master eNB, MeNB), controlling the master cell group, MCG, and the NR access node acts as the secondary node (in this case sometimes also known as the Secondary gNB, SgNB), controlling the secondary cell group, SCG. The SgNB may not have a control plane connection to the core network (EPC) which instead is provided MeNB and in this case the NR. This is also called as "Non-standalone NR" or, in short, "NSA NR". Notice that in this case the functionality of an NR cell is limited and would be used for connected mode UEs as a booster and/or diversity leg, but an RRC_IDLE UE cannot camp on these NR cells.

With the introduction of 5GC, other options may be also valid. As mentioned above, option 2 supports stand-alone NR deployment where gNB is connected to 5GC. Similarly, LTE can also be connected to 5GC using option 5 (also known as eLTE, E-UTRA/5GC, or LTE/5GC and the node can be referred to as an ng-eNB). In these cases, both NR and LTE are seen as part of the NG-RAN (and both the ng-eNB and the gNB can be referred to as NG-RAN nodes).

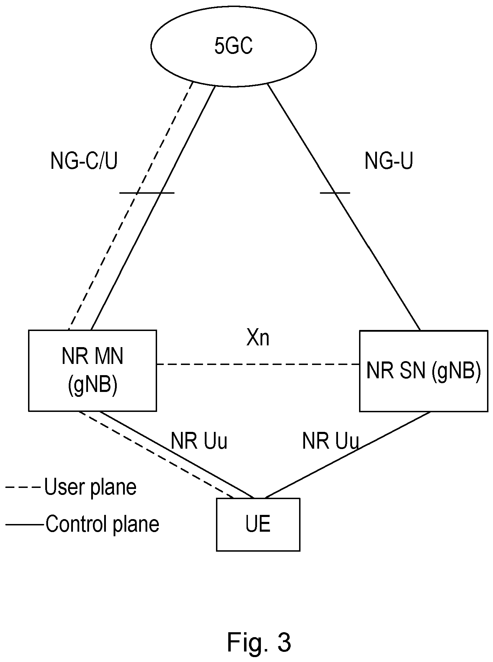

It is worth noting that there are also other variants of dual connectivity between LTE and NR which have been standardized as part of NG-RAN connected to 5GC. Under the MR-DC umbrella, there is:
- EN-DC (Option 3): LTE is the master node and NR is the secondary node (EPC CN employed, as depicted in Figure 2)
- NE-DC (Option 4): NR is the master node and LTE is the secondary (5GCN employed)
- NGEN-DC (Option 7): LTE is the master node and NR is the secondary (5GCN employed)
- NR-DC (variant of Option 2): Dual connectivity where both the master node, MN, controlling the MCG, and the secondary node, SN, controlling the SCG, are NR (5GCN employed, as depicted in Figure 3).

As migration for these options may differ from different operators, it is possible to have deployments with multiple options in parallel in the same network e.g. there could be eNB base station supporting option 3, 5 and 7 in the same network as NR base station supporting 2 and 4. In combination with dual connectivity solutions between LTE and NR it is also possible to support CA (Carrier Aggregation) in each cell group (i.e. MCG and SCG) and dual connectivity between nodes on same RAT (e.g. NR-NR DC). For the LTE cells, a consequence of these different deployments is the co-existence of LTE cells associated to eNBs connected to EPC, 5GC or both EPC/5GC.

As said earlier, DC is standardized for both LTE and E-UTRA -NR DC (EN-DC).

LTE DC and EN-DC are designed differently when it comes to which nodes control what. Basically, there are two options:
1. Centralized solution (like LTE-DC),
2. Decentralized solution (like EN-DC).

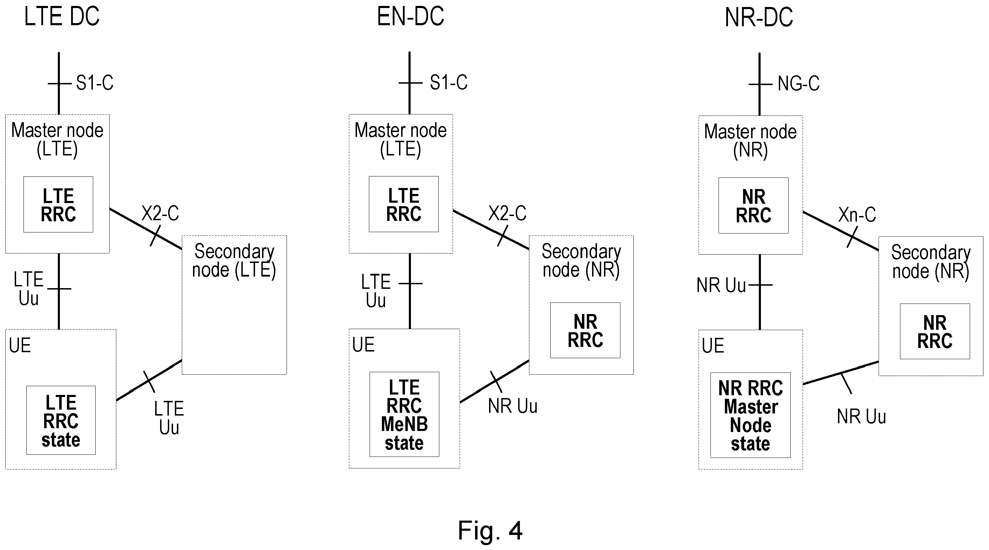

Figure 4 shows the schematic control plane architecture for LTE DC, EN-DC and NR-DC. The main difference here is that in EN-DC and NR-DC, the SN has a separate NR RRC entity. This means that the SN can control the UE also; sometimes without the knowledge of the MN but often the SN needs to coordinate with the MN. In LTE-DC, the RRC decisions always come from the MN (MN to UE). Note however, the SN still decides the configuration of the SN, since it is only the SN itself that has knowledge of what kind of resources, capabilities etc. it has.

For EN-DC and NR-DC, the major changes compared to LTE DC are:
- The introduction of split bearer from the SN (known as SCG split bearer)
- The introduction of split bearer for RRC
- The introduction of a direct RRC from the SN (also referred to as SCG SRB)

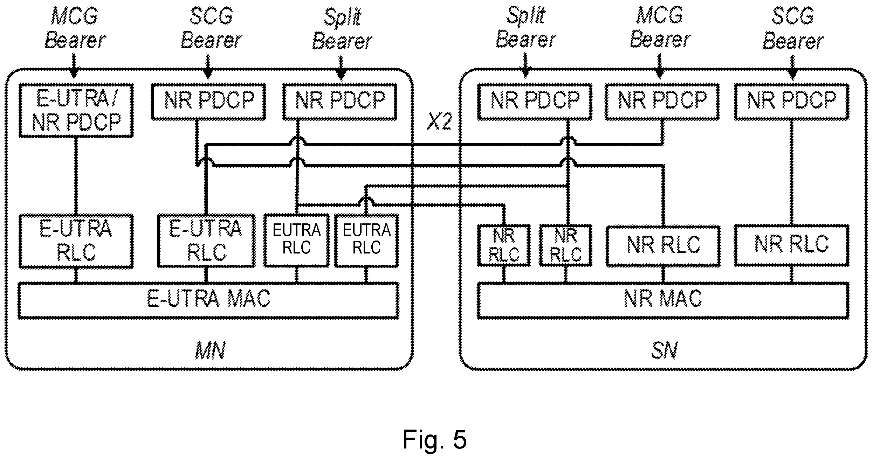

Figure 5 shows, from the network perspective, the user plane protocol architecture in MR-DC with EPC (EN-DC). In this case, the network can configure either E-UTRA PDCP or NR PDCP for MN terminated MCG bearers while NR PDCP is always used for all other bearers.

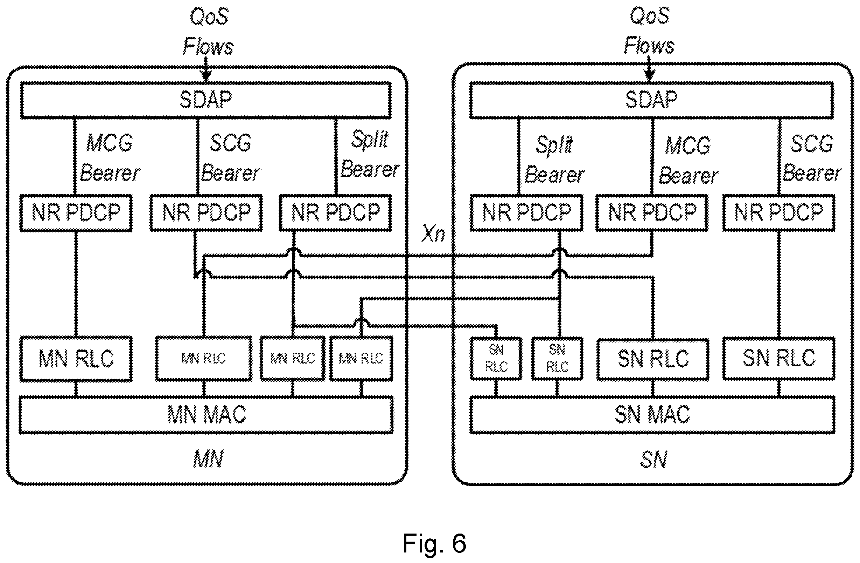

Figure 6 shows, from the network perspective, the user plane protocol architecture in MR-DC with 5GC (NGEN-DC, NE-DC and NR-DC). In MR-DC with 5GC, NR PDCP is always used for all bearer types. In NGEN-DC, E-UTRA RLC/MAC is used in the MN while NR RLC/MAC is used in the SN. In NE-DC, NR RLC/MAC is used in the MN while E-UTRA RLC/MAC is used in the SN. In NR-DC, NR RLC/MAC is used in both MN and SN.

### Conditional PSCell Change (CPC) Rel-16

A solution for Conditional PSCell Change (CPC) procedure was standardized in Rel-16. Therein a UE operating in Multi-Radio Dual Connectivity (MR-DC) receives in a conditional reconfiguration one or multiple RRC Reconfiguration(s) (e.g. an *RRCReconfiguration* message) containing an SCG configuration (e.g. an *secondaryCellGroup* of IE *CellGroupConfig*) with a *reconfigurationWithSync* that is stored and associated to an execution condition (e.g. a condition like an A3/A5 event configuration), so that one of the stored messages is only applied upon the fulfillment of the execution condition e.g. associated with the serving PSCell, upon which the UE would perform PSCell change (in case it find a neighbour cell that is better than the current SpCell of the SCG).

In rel-16 CPC will be supported, but in rel-17 also PSCell Addition will be included, i.e. Conditional PSCell Addition/Change (CPAC). In rel-16 only intra-SN CPC without MN involvement is standardized. Inter SN PSCell CPC and CPC with MN involvement will be included in rel-17.

The following background information is useful to understand the context of the invention, as defined in the appended claims.
- NEC: "Expected signalling flows for SN-initiated PSCell change", 3GPP R2-1915243, 8 November 2019
- US 2020/396661 A1 (WU YUMIN [CN]) 17 December 2020
- POTEVIO: "Conditional PSCell addition and change in MR-DC", 3GPP R2-2007839, 7 August 2020
- CATT: "Summary of [Post111-e][920][eDCCA] Conditional PSCell Change and Addition (CATT)", 3GPP R2-2009360, 23 October 2020.

### SUMMARY

There currently exist certain challenge(s). In rel-16, for intra-SN Conditional PSCell Change (CPC), the SN builds the RRC reconfiguration message containing the conditional reconfiguration. In rel-17, the following agreement was made for inter-SN CPC:

| |
|---|
| **Proposal 1: Option 1 should be used for the generation of conditional reconfiguration for SN initiated inter-SN conditional PSCell change.** |
| **Option 1: The MN generates CPC. The source SN sets the execution condition and communicates it to the MN. The MN generates the conditional reconfiguration message including the execution condition(s) provided by the source SN and RRCReconfiguration provided by the candidate PSCell(s).** |

That means that in rel-17, it is the MN that generates the RRC message containing the conditional reconfiguration.

A problem that arises from these agreements is if the UE is to be configured with CPC for multiple target cells, where some of them reside in the source SN and some of them reside in a different SN (a neighbour SN). In such a situation, it is not clear which node that generates the conditional reconfiguration and which procedure is used.

Certain aspects of the present disclosure and their embodiments may provide solutions to these or other challenges. The techniques described herein comprise respective methods at a network node operating as a Master Node (MN) for a UE configured with MR-DC, at a network node operating as a Source Secondary Node (S-SN) for a UE configured with MR-DC, and at a UE for configuring CPC with candidate target cells associated to the Source SN (S-SN) and to at least one neighbour SN (that is not the S-SN). Corresponding apparatus, or network nodes, configured to perform the methods are also provided and described herein.

The techniques described herein can comprise the S-SN determining to configure CPC for target candidate cells of the S-SN (at least one) and target candidate cells of a neighbour SN (that is not the S-SN, and is denoted t-SN). Various embodiments describe different ways on how this can be done, e.g. in a single message and single procedure, in two messages (one for S-SN cells and one for T-SN cells), etc.

The techniques described herein can comprise the MN receiving a request to configure CPC from the S-SN for target candidate cells of the S-SN (at least one) and target candidate cells of a neighbour SN (that is not the S-SN, and is denoted t-SN). The method can comprise the MN triggering CPC configuration to the t-SN, e.g. by transmitting an SN Addition Request, receiving an SN Addition Request Ack including the RRC Reconfiguration per target candidate of the t-SN (RRCReconfiguration**) and generating CPC configuration in MN format for the target candidates of the t-SN. Then, for the target candidate cells of the S-SN, the method at the MN can comprise one or more different alternatives:
- The MN can receive the CPC configuration generated by the S-SN (e.g. in an S-NODE MODIFICATION REQUIRED message); that is merged with the CPC configuration in MN format generated by the MN for the target candidates of the t-SN; after merging in the same RRC message that is provided to the UE;
- The MN receives from the S-SN a message (e.g. in an S-NODE CHANGE REQUIRED message) for the target candidate of the S-SN the target candidate configuration (e.g. RRCReconfiguration**) so the MN generates CPC in MN format for the target candidates of the S-SN.

The techniques described herein can comprise a wireless terminal (also called User Equipment - UE) capable to operate in MR-DC (i.e. capable of operating in MR-DC):
- reporting capability(ies) associated to CPC;
   ∘ where the capability(ies) can be a single capability to indicate that the UE supports CPC configuration in both SN and MN format. By 'single' it is meant that both formats are supported, but that could be in a further granularity, e.g. 'single' for a given frequency range, like one for FR1 (Frequency Range 1) and another for FR2 (Frequency Range 2).
      That would be equivalent to saying that the UE supports (e.g. for a given frequency range) CPC configuration with target candidate cells of the S-SN (i.e. intra-SN CPC) and CPC configuration with target candidate cells of a neighbour SN, denoted t-SN (i.e. inter-SN CPC).
   ∘ there can be two capabilities, one to indicate that the UE supports CPC configuration in both SN format (e.g. intra-SN CPC) and another to indicate that the UE supports CPC configuration in both SN format (e.g. intra-SN CPC);
- receiving a CPC configuration in MN format;
- receiving a CPC configuration in SN format; and
- applying the CPC configuration and performing the monitoring of execution conditions.

Further details of the techniques described herein are provided below, and are organized into a number of groups or sets of embodiments. The group/set labels used in the following paragraphs relate to later sections of the description.

Embodiment Set 1 (does not form part of the invention as defined by the appended claims) - In a first set of embodiments, the MN can merge intra-SN CPC configurations and inter-SN CPC configurations as a CPC configuration in MN format. In other words, CPC can be configured towards the UE as an MCG configuration, i.e. it is not configured as an MR-DC configuration in mrdc-SecondaryCellGroup (as defined in TS 38.331). This is equivalent to harmonizing the CPC configurations both from S-SN and neighbour SN as an inter-SN CPC configuration, even though there may be candidate target cell(s) associated to the Source SN. That can comprise the S-SN transmitting a request to the MN for configuring CPC (e.g. as an SN Change Required including an indication that the procedure is conditional, for CPC) to the MN, including target candidate cells from the S-SN and target candidate cells from a neighbour SN, as if this would be an inter-SN CPC. The request can contain information enabling the MN to request CPC for a neighbour SN (e.g. candidate target cell information, like measurements and/or identifiers and T-SN identifiers), but also to request CPC to the S-SN (e.g. as if the S-SN would have been a neighbour SN). It can comprise the MN requesting CPC for the target candidate cells of a neighbour SN (with an SN Addition procedure, that is conditional) and also to the S-SN, and receiving the target candidate configurations (RRCReconfiguration** per candidate) from the neighbour SN and the S-SN, and generating the CPC in MN format for the neighbour SN target candidate(s) and the S-SN. An aspect is that the S-SN is somewhat treated by the MN as a neighbour SN, to simplify the way CPC configurations are generated by the MN. After generating the CPC in MN format for the neighbour SN target candidate(s) and for the S-SN, the MN can configure the UE with an RRCReconfiguration.

Embodiment Set 2 - In a second set of embodiments, the MN can transmit a message to the UE containing both CPC configuration generated by the MN and CPC configuration generated by the source SN. In other words, the UE can receive CPC in MN format for target candidates associated to the neighbour SN, and CPC in SN format for target candidates associated to the S-SN, and monitors CPC for these simultaneously. On the network side, the S-SN can determine to configure CPC and request the MN to configure CPC. However, differently from the first set of embodiments, here the S-SN can generate the CPC configurations for intra-SN CPC in SN format and request the MN to generate CPC configuration for target candidate cells from neighbour SN(s), as different/parallel network procedures. Then, the MN can obtain all CPC configurations (i.e. from the S-SN and neighbour SN) before it configures the UE with CPC, which reduces the signalling for configuring CPC over the air interface. The solution may comprise a mechanism to allow the MN to identify that the reception of an SN Change Required for CPC towards a neighbour is follow up by a SN Modification Required for CPC for the S-SN as target candidate (e.g. each message may contain that indication).

Embodiment Set 3 (does not form part of the invention as defined by the appended claims) - In a third set of embodiments, the MN can merge intra-SN CPC configurations and inter-SN CPAC configurations into one CPC configuration built by the MN, i.e. in MN format (which, to some extent, is as in Embodiment Set 1 described above and below). Here, the S-SN can send a message to the MN including its target candidate configuration directly to the MN so that the MN does not need to request it later, i.e. the S-SN can send the RRCReconfiguration**, execution condition(s), and SCG measConfig for CPC, all per target candidate, and upon reception the MN generating a CPC configuration in MN format. The message from S-SN to the MN can also include information enabling the MN to request CPC for a neighbour SN (e.g. candidate target cell information, like measurements and/or identifiers and T-SN identifiers); so that the MN can request CPC for the target candidate cells of a neighbour SN (with an SN Addition procedure, that is conditional), receive the target candidate configurations (RRCReconfiguration** per candidate) and generate the CPC in MN format for the neighbour SN target candidate(s), that is to be merged with the CPC in MN format that was generated for the S-SN target candidates. That CPC configuration in MN format, comprising target candidate cells from the S-SN and the neighbour SN, can then be provided to the UE.

Embodiment Set 4 (does not form part of the invention as defined by the appended claims) - In a fourth set of embodiments, the MN can configure intra-SN CPC configurations (in SN format) and inter-SN CPC configurations (in MN format) in two different procedures to the UE. In other words, the S-SN can determine to configure CPC for a UE for target candidate cells associated to the S-SN and target candidate cells associated to a neighbour SN (denoted t-SN), e.g. based on measurement reports for these cells and based on the UE capability(ies), reported by the UE, indicating that the UE is capable of being configured with CPC configuration in SN format and is capable of being configured with CPC configuration in MN format. The S-SN can trigger two procedures, one for inter-SN CPC and one for intra-SN CPC. The MN can receive each request and configure the UE independently with these procedures, with CPC in MN format and CPC in SN format.

Thus, the techniques described herein provide methods and apparatus/network nodes for configuring measurements applicable for deactivated SCG mode of operation.

According to a first aspect, there is provided a method performed by a wireless device according to claim 1.

According to a second aspect, there is provided a method performed by a Source Secondary Node, S-SN according to claim 5.

According to a third aspect, there is provided a method performed by a Master Node, MN according to claim 11.

According to a fourth aspect, there is provided a wireless device according to claim 15.

According to a fifth aspect, there is provided a Source Secondary Node, S-SN according to claim 17.

According to an sixth aspect, there is provided a Master Node, MN according to claim 19.

Thus, there are, proposed herein, various embodiments which address one or more of the issues disclosed herein.

Certain embodiments may provide one or more of the following technical advantage(s). Advantage(s) of the disclosed techniques are that they enable CPC to be configured with multiple target cells when some target cells reside in the source SN and some target cells reside in a different SN. This may increase the likelihood of a successful procedure, as target candidate cells should be selected at least based on their radio conditions, not based on whether the cells reside in the same source SN or another neighbour SN.

### BRIEF DESCRIPTION OF THE DRAWINGS

Some of the embodiments contemplated herein will now be described more fully with reference to the accompanying drawings, in which:
Figure 1 illustrates dual connectivity combined with carrier aggregation in MR-DC;
Figure 2 illustrates E-UTRAN-NR dual connectivity (EN-DC);
Figure 3 illustrates New Radio dual connectivity (NR-DC);
Figure 4 illustrates Control Plane architectures for Dual Connectivity in LTE DC, EN-DC and NR-DC;
Figure 5 shows network side protocol termination options for MCG, SCG and split bearers in MR-DC with EPC (EN-DC);
Figure 6 shows network side protocol termination options for MCG, SCG and split bearers in MR-DC with 5GC (NGEN-DC, NE-DC and NR-DC);
Figure 7 is a signalling diagram illustrating an embodiment in the first set of embodiments;
Figure 8 is a signalling diagram illustrating another embodiment in the first set of embodiments;
Figure 9 is a signalling diagram illustrating an embodiment in the second set of embodiments;
Figure 10 is a signalling diagram illustrating an embodiment in the third set of embodiments;
Figure 11 is a signalling diagram illustrating an embodiment in the fourth set of embodiments;
Figure 12 is a signalling diagram illustrating another embodiment in the fourth set of embodiments;
Figure 13 shows an example of a communication system/wireless network in accordance with some embodiments;
Figure 14 shows a UE in accordance with some embodiments;
Figure 15 is a block diagram illustrating a virtualization environment in which functions implemented by some embodiments may be virtualized;
Figure 16 shows a telecommunication network connected via an intermediate network to a host computer in accordance with some embodiments;
Figure 17 shows a host computer communicating via a base station with a user equipment over a partially wireless connection in accordance with some embodiments;
Figure 18 shows methods implemented in a communication system including a host computer, a base station and a user equipment in accordance with some embodiments;
Figure 19 shows methods implemented in a communication system including a host computer, a base station and a user equipment in accordance with some embodiments;
Figure 20 shows methods implemented in a communication system including a host computer, a base station and a user equipment in accordance with some embodiments;
Figure 21 methods implemented in a communication system including a host computer, a base station and a user equipment in accordance with some embodiments;
Figure 22 is a flow chart illustrating a method performed by a wireless device in accordance with some embodiments;
Figure 23 is a flow chart illustrating a method performed by a S-SN in accordance with some embodiments;
Figure 24 is a flow chart illustrating a method performed by a MN in accordance with some embodiments; and
Figure 25 is a flow chart illustrating a method performed by a T-SN in accordance with some embodiments.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

### Initial points

The techniques described herein refer to a first network node operating as a Master Node (MN), e.g. having a Master Cell Group (MCG) configured to the UE and/or an MN-terminated bearer. The MN can be, for example, a gNodeB, or a Central Unit gNodeB (CU-gNB) or an eNodeB, or a Central Unit eNodeB (CU-gNB), or any network node and/or network function.

The techniques described herein also refer to a second network node operating as a Secondary Node (SN), or Source Secondary Node (S-SN) e.g. having a Secondary Cell Group (SCG) preconfigured (i.e. not connected to) to the UE. The SN can be, for example, a gNodeB, or a Central Unit gNodeB (CU-gNB) or an eNodeB, or a Central Unit eNodeB (CU-gNB), or any network node and/or network function. It should be noted that MN, S-SN and T-SN may be from the same or different Radio Access Technologies (and possibly be associated to different Core Network nodes).

This disclosure often refers to a "Secondary Node (SN)", or target SN. This is equivalent to saying this is a target candidate SN, or a network node associated to a target candidate PSCell that is being configured. If the UE would connect to that cell, transmissions and receptions with the UE would be handled by that node if the cell is associated to that node.

This disclosure indicates that a cell resides in a node, e.g. a target candidate cell resides in the S-SN or the t-SN. That is equivalent to saying that a cell is managed by the node, or is associated to the node, or associated with the node, or that the cell belongs to the node, or that the cell is of the node.

As used herein, "SN-initiated CPC" corresponds to a procedure wherein the Source SN for a UE configured with MR-DC determines to configure CPC. Upon determining, the Source SN selects, e.g. based on reported measurements, one or more target candidate cells (target candidate PSCell(s)) wherein at least one cell is associated to the Source SN, and at least another cell is associated to a neighbour SN. It can be said that if all target candidate cells are associated to the Source SN, it is an "SN-initiated intra-SN CPC", which may be referred to as the Release 16 solution. It can be said that if at least one target candidate cell is associated to the/a neighbour SN, it is an "SN-initiated inter-SN CPC", which may be referred as a Release 17 solution.

This disclosure refers to a candidate SN, or SN candidate, or an SN, as the network node (e.g. gNodeB) that is prepared during the CPA procedure and that can create an RRC Reconfiguration message with an SCG configuration (e.g. RRCReconfiguration**) to be provided to the UE and stored, with an execution condition, wherein the UE only applies the message upon the fulfilment of the execution condition. That candidate SN is associated to one or multiple PSCell candidate cell(s) that the UE can be configured with. The UE then can execute the condition and access one of these candidate cells, associated to a candidate SN that becomes the SN or simply the SN after execution (i.e. upon fulfilment of the execution condition).

This disclosure refers to a Conditional PSCell Change (CPC) configuration and procedures (like CPC execution), most of the time to refer to the procedure from the UE perspective. Other terms may be considered as synonyms such as conditional reconfiguration, or Conditional Configuration (since the message that is stored and applied upon fulfilment of a condition is an *RRCReconfiguration* or *RRCConnectionReconfiguration*)*.* In terms of terminology, conditional handover (CHO) could also be interpreted in a broader sense, as also covering CPA (Conditional PSCell Change) procedures. This disclosure refers to a Conditional SN Change most of the time to refer to the procedure from the UE perspective, to refer to procedures between network nodes wherein a node requests a target candidate SN (which may be the same as the Source SN or a neighbour SN) to configure a conditional PSCell Change (CPC) for at least one of its associated cells (cell associated to the target candidate SN).

This disclosure refers to CPAC as a way to refer to either a Conditional PSCell Addition (CPA) or a Conditional PSCell Change (CPC).

This disclosure refers to a neighbour SN and a Source SN as different entities, though both could be a target candidate SN for CPC.

The configuration of CPC can be done using the same IEs as conditional handover, which may be called, at some point, conditional configuration, or conditional reconfiguration. The principle for the configuration is the same, with configuring triggering/execution condition(s) and a reconfiguration message to be applied when the triggering condition(s) are fulfilled. The configuration IEs from TS 38.331 are as follows:

### - ConditionalReconfiguration

The IE *ConditionalReconfiguration* is used to add, modify and release the configuration of conditional configuration.

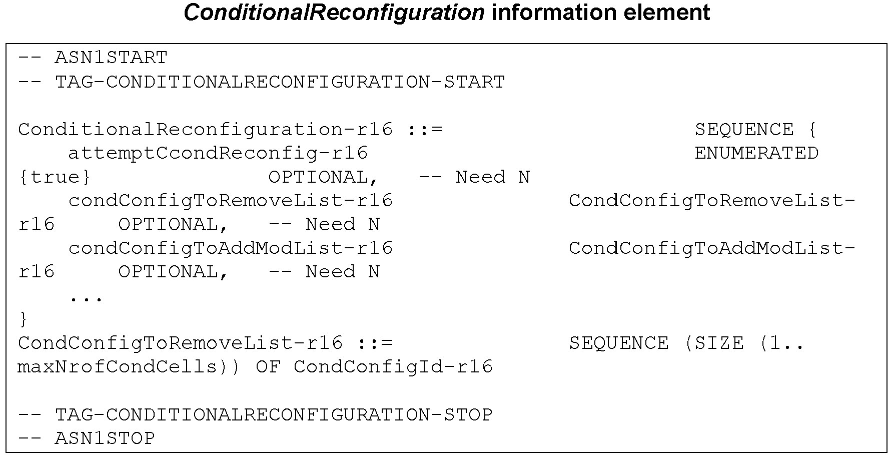

| ***ConditionalReconfiguration* field descriptions** |
|---|
| ***condConfigToAddModList*** |
| List of the configuration of candidate SpCells to be added or modified for CHO or CPC. |
| ***condConfigToRemoveList*** |
| List of the configuration of candidate SpCells to be removed. When the network removes the stored conditional configuration for a candidate cell, the network releases the measIDs associated to the *condExecutionCond* if it is not used by the *condExecutionCond* of other candidate cells. |

### - CondConfigld

The IE *CondConfigId* is used to identify a CHO or CPC configuration.

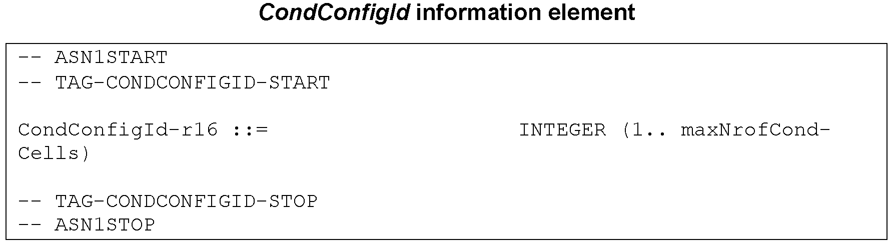

### - CondConfigToAddModList

The IE *CHO-ConfigToAddModList* concerns a list of conditional configurations to add or modify, with for each entry the *cho-ConfigId* and the associated *condExecutionCond* and *condRRCReconfig.*

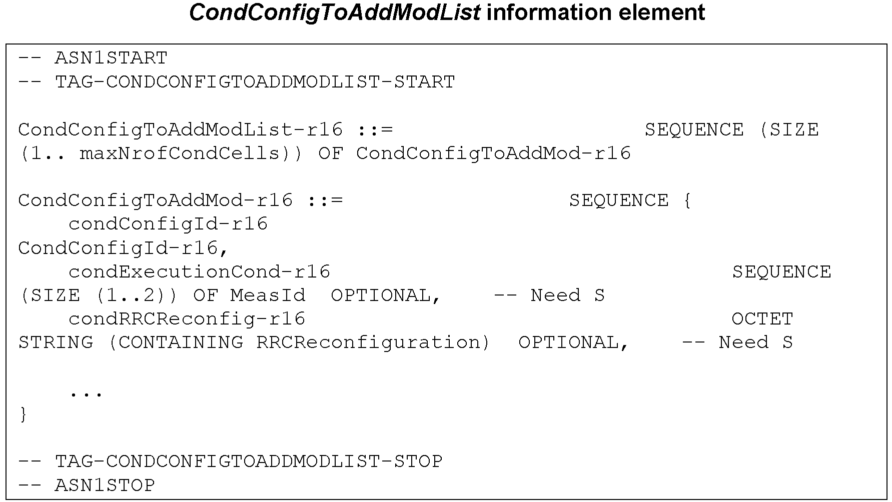

| ***CondConfigToAddMod* field descriptions** |
|---|
| ***condExecutionCond*** |
| The execution condition that needs to be fulfilled in order to trigger the execution of a conditional configuration. The field is mandatory present when a *condConfigId* is being added. Otherwise, when the *condRRCReconfig* associated to a *condConfigId* is being modified it is optionally present and the UE uses the stored value if the field is absent. |
| ***condRRCReconfig*** |
| The *RRCReconfiguration* message to be applied when the condition(s) are fulfilled. The field is mandatory present when a *condConfigId* is being added. Otherwise, when the *condExecutionCond* associated to a *condConfigId* is being modified it is optionally present and the UE uses the stored value if the field is absent. |

In the different embodiments sets described herein these IEs can be used differently, e.g. sometimes generated by the MN, sometimes generated by the source SN, sometimes by a target candidate SN.

In the different embodiment sets it is indicated that the CPC is in MN format when the CPC configuration is not configured as an MR-DC configuration in mrdc-SecondaryCellGroup (as defined in TS 38.331). In other words, the UE receives an *RRCReconfiguration* from the MN that may contain the mrdc-SecondaryCellGroup (e.g. in case the UE is also configured with an SCG MeasConfig for inter-SN CPC) but the CPC is not within that container. That means the IEs listed above (e.g. the IE ConditionalReconfiguration) are not included in mrdc-SecondaryCeIlGroup.

In the different embodiment sets described herein it is indicated that the CPC is in SN format when the CPC configuration is configured as an MR-DC configuration in mrdc-SecondaryCellGroup (as defined in TS 38.331). In other words, the UE receives an *RRCReconfiguration* from the MN that may contain the mrdc-SecondaryCellGroup and the CPC is within that container. That means the IEs listed above (e.g. the IE ConditionalReconfiguration) are included in mrdc-SecondaryCellGroup (e.g. within a series of other nested IEs).

### Embodiment Set 1 - Network merges CPAC configurations to MN format (UE receives CPC in MN format)

In a first set of embodiments, the MN can merge intra-SN CPC configurations and inter-SN CPC configurations as a CPC configuration in MN format. In other words, CPC can be configured towards the UE as an MCG configuration, i.e. it is not configured as an MR-DC configuration in mrdc-SecondaryCellGroup (as defined in TS 38.331). This is equivalent to harmonizing the CPC configurations both from S-SN and neighbour SN as an inter-SN CPC configuration, even though there may be candidate target cell(s) associated to the Source SN. That can comprise the S-SN transmitting a request to the MN for configuring CPC (e.g. as an SN Change Required including an indication that the procedure is conditional, for CPC) to the MN, including target candidate cells from the S-SN and target candidate cells from a neighbour SN, as if this would be an inter-SN CPC. The request can contain information enabling the MN to request CPC for a neighbour SN (e.g. candidate target cell information, like measurements and/or identifiers and T-SN identifiers), but also to request CPC to the S-SN (e.g. as if the S-SN would have been a neighbour SN). It can comprise the MN requesting CPC for the target candidate cells of a neighbour SN (with an SN Addition procedure, that is conditional) and also to the S-SN, and receiving the target candidate configurations (RRCReconfiguration** per candidate) from the neighbour SN and the S-SN, and generating the CPC in MN format for the neighbour SN target candidate(s) and the S-SN. An aspect is that the S-SN is somewhat treated by the MN as a neighbour SN, to simplify the way CPC configurations are generated by the MN. After generating the CPC in MN format for the neighbour SN target candidate(s) and for the S-SN, the MN can configure the UE with an RRCReconfiguration.

These embodiments provide a benefit in case there is a separated UE capability reported by the UE for intra-SN CPC (Release 16 feature) and inter-SN CPC (Release 17 feature), and the UE is only capable of inter-SN CPC (Release 17 feature), i.e. only capable of handling CPC configured in MN format. Due to these embodiments, despite the fact that the UE can only be configured with inter-SN CPC (Release 17 feature), or, fundamentally, be capable of being configured with CPC in MN format, the CPC can include candidate target cells from the Source SN. It should be noted that while it has been described that the S-SN configures target candidate from S-SN and from a neighbour SN, these embodiments are also applicable in case the S-SN wants to configure CPC only with target candidates from the S-SN, but using the inter-SN CPC configuration mechanism (in case the UE is only capable of inter-SN CPC, i.e., to be configured with CPC with MN format). These solutions can also be advantageous to the UE, as all candidate target cells can be configured in the same way, e.g. in the RRC reconfiguration message as if it would be all inter-SN CPC, CPC in MN format.

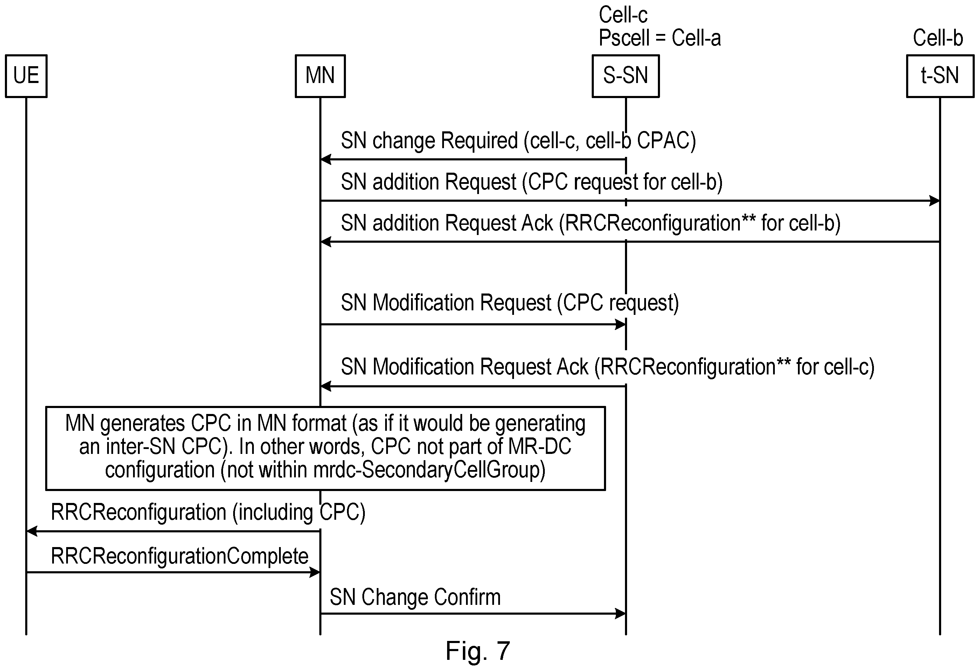

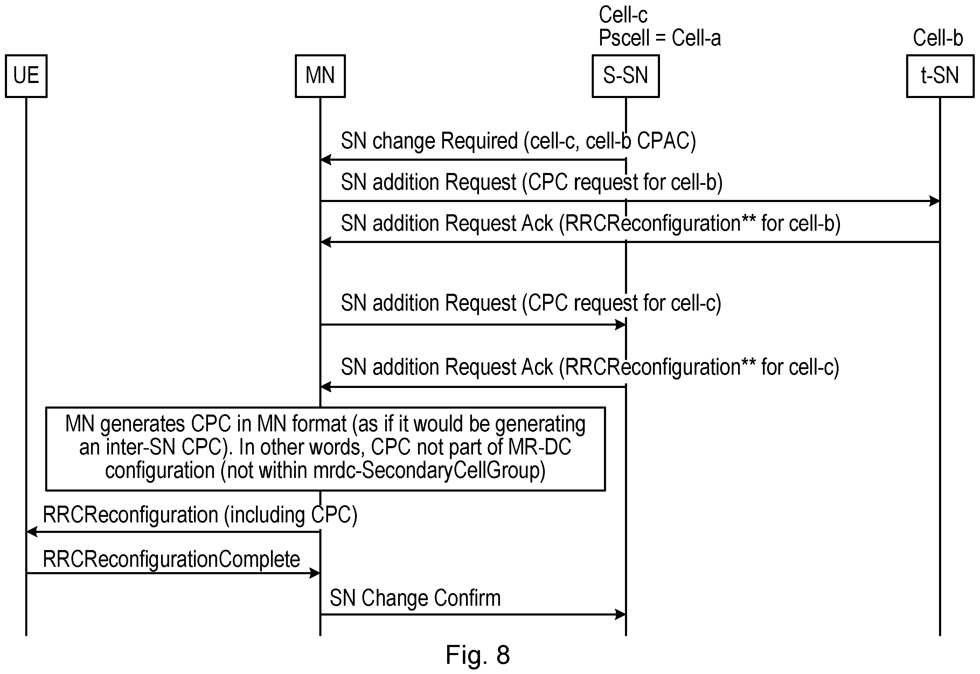

Thus, the first set of embodiments can comprise a method **executed by a source Secondary Node (S-SN).** The method can comprise any one or more of the following steps or operations:
- determining to configure CPC with multiple target cells, where one or more target cells reside in the source SN and one or more target cells reside in a different SN;
   o The determination can be based on measurements reported by the UE to the MN and forwarded to the SN (e.g. if only SRB1 is configured) or measurements reported directly the S-SN (e.g. via SRB3 or other mechanisms like based on L1 reporting). These measurements may be associated to cells that the S-SN identifies as its own cells (i.e. cells residing in the S-SN) and to neighbour SN(s). That identification may be done by identifying the physical cell identity associated to each cell measurement and the matching of a physical cell identity of the Source SN, and the matching of a physical cell identity of a Neighbour SN in its neighbour relation.
   ∘ Regarding the handling of UE capabilities related to CPC, several options are possible:
      ▪ In one option, the Source SN can obtain the UE capabilities and determine that the UE is capable of being configured with intra-SN CPC and inter-SN CPC simultaneously. That means the UE can be configured with target candidate cells of the S-SN (i.e. capable of intra-SN CPC) and of a neighbour SN (i.e. capable of inter-SN CPC). The capability could alternatively be translated as the UE being capable of being configured simultaneously with CPC in MN format and SN format.
         • There can be at least two types of capabilities associated to this, i.e. in a first capability the UE indicates that it supports intra-SN CPC, and in a second capability the UE indicates that it supports inter-SN CPC. The UE can report the capability(ies) to the network, e.g. upon initial registration, attach, etc. 'Two types' can refer to there being more than one capability per type, for example, for a given type there can be one capability for a Frequency Range 1 and another capability for a Frequency Range 2.
            - If this is the case, the follow up steps described in this first set of embodiments can be applied by the MN.
         ▪ In another option regarding the handling of UE capabilities related to CPC, the Source SN can obtain the UE capabilities and determine that the UE is capable of being configured only with intra-SN CPC. In that case, the S-SN can determine to only configure candidate target cells that reside in the S-SN.
         ▪ In another option regarding the handling of UE capabilities related to CPC, the Source SN can obtain the UE capabilities and determine that the UE is capable of being configured only with inter-SN CPC (equivalent to being capable of being configured with CPC in MN format). In that case, the S-SN can determine to only configure candidate target cells that do not reside in the S-SN, i.e. that reside in a neighbour SN.
            - If this is the case, the follow up steps described in this first set of embodiments can also be applied by the MN, as the final goal is to generate a CPC configuration in MN format.
         ▪ In another option regarding the handling of UE capabilities related to CPC, a single capability can be defined to indicate that the UE is capable of handling simultaneously a CPC configuration MN format and in SN format.
            - If this is the case, the follow up steps described in this first set of embodiments can also be applied by the MN.
- transmitting a request in a message to the Master Node (MN) to configure CPC. Embodiments of this step/operation can include:
   o The message can contain measurements and/or a cell list for cell(s) in a different node and for cell(s) in the own node.
   ∘ This step can be considered as an SN-initiated CPC as it is the S-SN that can request the MN to configure CPC.
   ∘ In one option a single message can include the request for CPC for at least one target candidate cell in the S-SN and at least one target candidate cell in a neighbour SN. There can be different options for the message, such as:
      ▪ In one option the S-SN can transmit the request in an S-NODE CHANGE REQUIRED message.
         • In this case, the S-NODE CHANGE REQUIRED would not only request a CPC for inter-SN CPC, but also for intra-SN CPC.
         ▪ In one option the S-SN transmits the request in an S-NODE MODIFICATION REQUIRED message.
            - In this case, the S-NODE MODIFICATION REQUIRED would not only request a CPC for intra-SN CPC, but also for inter-SN CPC.
   o The request in a message to the Master Node (MN) to configure CPC can include the execution conditions mapped per target candidate cell, CPC related measConfig (e.g. the configuration of the measld(s), measObject(s), reportConfig(s) for CPC i.e. the association between meslD, reportConfig and MeasObject. This enables the MN to generate CPC for the target candidates in MN format.
   ∘ The request in a message to the Master Node (MN) to configure CPC can include the UE's SCG MeasConfig related to CPC, i.e. the SCG measConfig to be provided to the UE so that the UE understand which measurement(s) are associated to the measld(s) configured as execution conditions for CPC and that needs to be monitored. That can be included as an SCG RRC container (RRCReconfiguration***) to be applied by the UE upon reception of the CPC configuration.
      ▪ The CPC related measConfig can be within an SCG RRCReconfiguration (denoted RRCReconfiguration***) to be provided to the UE in SN format and to be applied upon CPC configuration. In that case, upon reception of the RRCReconfiguration including CPC (in MN format) and including this RRCReconfiguration*** the UE can transmit to the MN an RRCReconfigurationComplete including within an RRCReconfigurationComplete*** to be forwarded from the MN to the S-SN.
   ∘ The request in a message to the Master Node (MN) to configure CPC can include information enabling the MN to request CPC towards the neighbour SN and to request CPC to the S-SN.
      ▪ This information can comprise some addressing information, e.g. Node identifier. In the case of the S-SN, as that is known, the absence of the information can indicate that the candidate cell for which CPC is to be requested is associated to the S-SN whose identity is already known at the MN.
      ▪ For the T-SN candidate, the MN can trigger an SN Addition Request including a CPC indication to indicate that this is for CPC and receives an SN Addition Request Ack including the RRCReconfiguration** per target candidate cell from T-SN. That can later be used by the MN to generate the CPC in MN format to be then provided to the UE.
      ▪ For the S-SN candidate, the MN can trigger a procedure to request the RRCReconfiguration** per target candidate cell from T-SN. That can later be used by the MN to generate the CPC in MN format to the UE.
         - In one option the MN can trigger towards the S-SN an MN-initiated CPC, where the MN requests the RRCReconfiguration** per target candidate to the S-SN (that plays the role of a target candidate).
         - In another option the MN can transmit an SN Modification Request (including an indication this is for CPC) and receive an SN Modification Request Ack including the RRCReconfiguration** per S-SN's target candidate. An example of this option is shown in the signalling diagram of Figure 7.
         - In another option the MN can transmit an SN Addition Request (including an indication this is for CPC) and receive an SN Modification Request Ack including the RRCReconfiguration** per S-SN's target candidate. An SN Addition Request is typically used to establish a UE-signalling connection, though in this case, as it is towards the S-SN, such a connection already exits, so that upon reception the S-SN shall not do this gain, but rather interpret this as a request for CPC (to be responded, if possible, with an RRCReconfiguration** per target candidate). An example of this option is shown in the signalling diagram of Figure 8:

The first set of embodiments can also or alternatively comprise a method **executed by a Master Node (MN).** The method can comprise any or more of the following steps or operations:
- receiving a request from a source SN for configuration of CPC with multiple target cells, where at least one target candidate cell resides in the source SN and at least one target candidate cell resides in a different SN (or the T-SN node ID of the node hosting the target cells). As described above for the S-SN actions, the request can be included within one of the messages, e.g. S-NODE MODIFICATION REQUIRED or S-NODE CHANGE REQUEST. The message with the request can also contain measurements or a cell list for cell(s) in a different node and for cell(s) in the own node, or a list of T-SN node IDs for cell(s) in a different node;
- transmitting a request to a different SN than the source SN, for a target configuration for candidate target cell(s) for CPAC;
- receiving a request acknowledge from a different SN than the source SN, containing target configuration for candidate target cell(s) for CPAC;
- transmitting a request to a source SN, for a target configuration for candidate target cell(s) for CPAC;
- receiving a request acknowledge a source SN than the source SN, containing target configuration for candidate target cell(s) for CPAC;
- generating a CPC configuration for all candidate target cells in an RRCReconfiguration message wherein the CPC is in MN format. The CPC configuration can contain a conditional reconfiguration with conditions in the form of measID and a target configuration in an RRCReconfiguration (denoted RRCReconfiguration**) to be applied by the UE when the condition(s) are fulfilled. In other words, CPC can be configured towards the UE as an MCG configuration, i.e. not configured as an MR-DC configuration in mrdc-SecondaryCellGroup (as defined in TS 38.331).
   ∘ This step of the MN generating CPC in MN format may also be used with other means to obtain each *RRCReconfiguration*** per target candidate cell from the S-SN and from neighbour S-SN (as described in the follow up embodiments). For example, in at least these other cases:
      ▪ If S-SN provides the RRCReconfiguration** in the S-NODE CHANGE REQUIRED or S-NODE MODIFICATION REQUIRED;
      ▪ If S-SN provides the RRCReconfiguration** in response to a request from the MN e.g. in response to an SN MODIFICATION REQUIRED, SN ADDITION REQUEST or in general terms, as part of an MN-initiated CPC procedure;
   - transmitting an *RRCReconfiguration* with the conditional reconfiguration for CPC to the UE in MN format;
   - receiving an *RRCReconfigurationComplete* from the UE, indicating that the conditional reconfiguration is completed;
      ∘ According to one option for this step/operation, the *RRCReconfigurationComplete* can include embedded within another *RRCReconfigurationComplete* (for the SN and denoted *RRCReconfigurationComplete****) in case the UE has applied an SN RRC Reconfiguration containing for example the SCG measConfig including the CPC related measConfig.
   - receiving an *RRCReconfigurationComplete* (to the MN) with an embedded *RRCReconfigurationComplete* (to the SN where the target cell belongs) from the UE when the condition(s) are fulfilled, to indicate CPC execution;
      ∘ Upon reception of that message from the UE, the MN can determine which target candidate cell is selected by the UE for CPC execution, and the associated target candidate SN. For example, that may be the S-SN or a neighbour SN, and depending on that, different actions could be triggered by the MN and the target candidate SN.
         ▪ If the MN determines that the UE has executed CPC in a neighbour SN (i.e. not in the S-SN), the MN can indicate to the S-SN that SN Change is successful (or rather CPC execution is successful), so that the S-SN can continue with the steps related to data forwarding and releases its resources. That indication can be a CPC SUCCESS message, or be transmitted within such a message. For example, if data forwarding is needed the MN can provide data forwarding addresses to the source SN. If direct data forwarding is used for SN terminated bearers, the MN cam provide data forwarding addresses as received from the target SN to source SN. At this point, upon this indication, the S-SN can stop providing user data to the UE and, if applicable, start data forwarding. Then, the MN can inform the target candidate SN via SN Reconfiguration Complete message with the included SN RRC response message for the target SN, if received from the UE.
         ▪ Else, if the MN determines that the UE has executed CPC in the S-SN, the MN can indicate to the S-SN that PSCell Change within the S-SN is successful (or rather CPC execution is successful), so that the S-SN can continue with the steps without the need for data forwarding or without the release of its resources. That indication can be a CPC SUCCESS message, or be transmitted within such a message, or an SN Reconfiguration Complete message with the included SN RRC response message for the target SN, if received from the UE.

Other MN actions/operations and/or features can be as described above with reference to the method executed by the source Secondary Node (S-SN).

The first set of embodiments can also or alternatively comprise a method **executed by a target Secondary Node (T-SN).** The method can comprise any or more of the following steps or operations:
- receiving a request from an MN, for a target configuration for candidate target cell(s) for CPAC; and/or
- transmitting a request acknowledge to the MN, containing target configuration for candidate target cell(s) for CPAC.

The first set of embodiments can also or alternatively comprise a method **executed** by a **User Equipment (UE).** The method can comprise any or more of the following steps or operations:
- receiving an *RRCReconfiguration* with conditional reconfiguration for CPC from an MN (where CPC is in MN format but contains target candidate cells associate dot the S-SN and to a neighbour SN);
- transmitting an *RRCReconfigurationComplete* to the MN, indicating that the conditional reconfiguration is completed;
- monitoring the conditions; and/or
- transmitting an *RRCReconfigurationComplete* (to the MN) with an embedded *RRCReconfigurationComplete* (to the SN where the target cell belongs) when the condition(s) are fulfilled.

### Embodiment Set 2 - UE receives CPC configurations from different nodes (UE receives CPC in MN and SN formats)

In a second set of embodiments, the MN can transmit a message to the UE containing both CPC configuration generated by the MN and CPC configuration generated by the source SN. In other words, the UE can receive CPC in MN format for target candidates associated to the neighbour SN, and CPC in SN format for target candidates associated to the S-SN, and monitor CPC for these simultaneously. On the network side, the S-SN can determine to configure CPC and request the MN to configure CPC. However, differently from the first set of embodiments, here the S-SN can generate the CPC configurations for intra-SN CPC in SN format and request the MN to generate CPC configuration for target candidate cells from neighbour SN(s), as different/ parallel network procedures. Then, the MN can obtain all CPC configurations (i.e. from the S-SN and neighbour SN) before it configures the UE with CPC, which reduces the signalling for configuring CPC over the air interface. The solution may comprise a mechanism to allow the MN to identify that the reception of an SN Change Required for CPC towards a neighbour is follow up by a SN Modification Required for CPC for the S-SN as target candidate (e.g. each message may contain that indication).

These embodiments can be advantageous to the network as the MN can just add the conditional reconfiguration (CPC configuration) that it receives from the S-SN and the MN generated conditional reconfiguration. Compared to the first set of embodiments, it can also save one network procedure, as the MN does not have to request the source SN for a target configuration, as the MN receives the CPC configuration from the SN in the modification required and/or the SN Change Required.

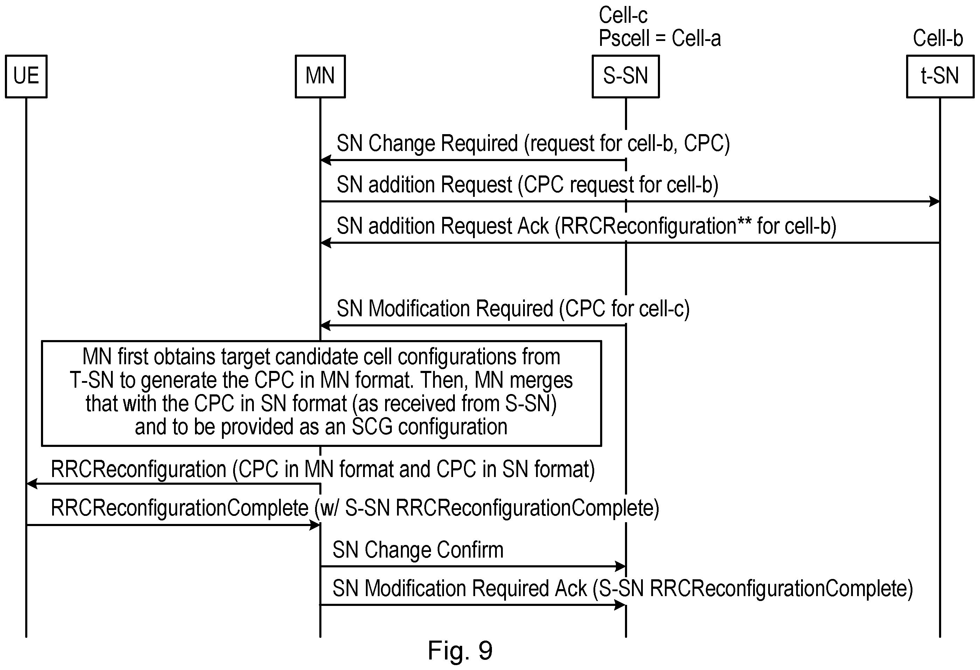

An example according to the second set of embodiments is shown in the signalling diagram of Figure 9.

Thus, the second set of embodiments can comprise a method **executed by a source Secondary Node (S-SN).** The method can comprise any one or more of the following steps or operations:
- determining to configure CPC with multiple target cells, where one or more target cells reside in the source SN and one or more target cells reside in a different SN;
   ∘ The determination can be based on measurements reported by the UE to the MN and forwarded to the SN (e.g. if only SRB1 is configured) or measurements reported directly the S-SN (e.g. via SRB3 or other mechanisms like based on L1 reporting). These measurements may be associated to cells that the S-SN identifies as its own cells (i.e. cells residing in the S-SN) and to neighbour SN(s). That identification can be done by identifying the physical cell identity associated to each cell measurement and the matching of a physical cell identity of the Source SN, and the matching of a physical cell identity of a Neighbour SN in its neighbour relation.
   ∘ Regarding the handling of UE capabilities related to CPC, several options are possible:
      ▪ In one option, the Source SN can obtain the UE capabilities and determine that the UE is capable of being configured with intra-SN CPC and inter-SN CPC simultaneously. That means the UE can be configured with target candidate cells of the S-SN (i.e. capable of intra-SN CPC) and of a neighbour SN (i.e. capable of inter-SN CPC). The capability could alternatively be translated as the UE being capable of being configured simultaneously with CPC in MN format and SN format.
         - There can be at least two types of capabilities associated to this, i.e. in a first capability the UE indicates that it supports intra-SN CPC, and in a second capability the UE indicates that it supports inter-SN CPC. The UE reports the capability(ies) to the network, e.g. upon initial registration, attach, etc. 'Two types' can refer to there being more than one capability per type, for example, for a given type there can be one capability for a Frequency Range 1 and another capability for a Frequency Range 2.
         - If this is the case, the follow up steps described in this second set of embodiments can be applied by the MN (as the UE would be capable of handling simultaneously CPC configuration in both SN and MN formats), and as the follow up steps rely on configuring the UE with CPC in both formats.
      ▪ In another option regarding the handling of UE capabilities related to CPC, the Source SN can obtain the UE capabilities and determine that the UE is capable of being configured only with intra-SN CPC. In that case, the S-SN can determine to only configure candidate target cells that reside in the S-SN;
      ▪ In another option regarding the handling of UE capabilities related to CPC, the Source SN can obtain the UE capabilities and determine that the UE is capable of being configured only with inter-SN CPC (equivalent to being capable of being configured with CPC in MN format). In that case, the S-SN can determine to only configure candidate target cells that do not reside in the S-SN, i.e. that reside in a neighbour SN.
      ▪ In another option regarding the handling of UE capabilities related to CPC, a single capability can be defined to indicate that the UE is capable of handling simultaneously a CPC configuration MN format and in SN format.
         - If this is the case, the follow up steps described in this second set of embodiments can also be applied by the MN.
- generating the CPC configuration (in SN format) for its own candidate target cells in an SN *RRCReconfiguration* message (to be provided by the UE and applied upon CPC configuration). The CPC configuration can contain a conditional reconfiguration with conditions in the form of *measID* and a target configuration in an *RRCReconfiguration* to be applied when the condition(s) are fulfilled;
   ∘ This CPC configuration in SN format can be included in a message to be transmitted to the MN, so the MN can provide to the UE that applies upon reception and starts to monitor the execution conditions for target cell candidates associated to the S-SN.
- transmitting a message to the Master Node (MN) including CPC configuration in SN format. The message can e.g. be an S-NODE MODIFICATION REQUIRED. The request can contain, e.g., measurements or a cell list for cell(s) in a different node or a list of T-SN node IDs;
   ∘ This message can contain the CPC configuration as generated in the previous step and associated to the target candidate cells of the S-SN. This CPC configuration can be in SN format.
   ∘ The CPC configuration can be in SN format and upon being received by the MN can be stored. Then, the MN can request CPC to/from target neighbour SN(s) indicated by the S-SN, and obtain the target candidate configurations, upon which it can generate the CPC configuration in MN format. Then, it can merge this CPC configuration in MN format with the stored CPC in SN format (as received by the S-SN).
- transmitting a message including a request to a Master Node (MN) for CPC associated to target candidates in a neighbour SN. The message can, e.g., be S-NODE CHANGE REQUEST.
   ∘ The message from the S-SN requesting CPC to the MN (e.g. S-NODE CHANGE REQUIRED) can include the execution conditions mapped per target candidate cell, CPC related measConfig (e.g. the configuration of the measld(s), measObject(s), reportConfig(s) for CPC, and the association between meslD, reportConfig and MeasObject).
      ▪ The CPC related measConfig can be within an SCG RRCReconfiguration (denoted RRCReconfiguration***) to be provided to the UE in SN format and to be applied upon CPC configuration. In that case, upon reception of the RRCReconfiguration including CPC (in MN format) and including this RRCReconfiguration*** the UE can transmit to the MN an RRCReconfigurationComplete including within an RRCReconfigurationComplete*** to be forwarded from the MN to the S-SN.
      ▪ In one option the SCG MeasConfig can be included in the same SN RRC Reconfiguration that contains CPC (as generated by the SN). That can simplify the MN actions in the sense that a single SN RRC Reconfiguration can be provided to the UE including the SCG measConfig for CPC (for the target candidates of neighbour SN) and the CPC configuration for the target candidates of S-SN.
   ∘ The message including the request can also include information enabling the MN to request for CPC towards the neighbour SN.
      ▪ For the T-SN candidate, the MN can trigger an SN Addition Request including a CPC indication to indicate that this is for CPC and receive an SN Addition Request Ack including the RRCReconfiguration** per target candidate cell from T-SN. That can later be used by the MN to generate the CPC in MN format to the UE (to be later merged with the CPC in SN format as provided by the S-SN for its own target candidates).
   ∘ In another alternative, the requests for configuring CPC for t-SN can be merged with the CPC configuration for the S-SN in SN format, and transmitted in a single message from the S-SN to the MN. Thus in this second set of embodiments the MN only configures the UE with CPC when it obtains the CPC configuration from S-SN for S-SN target candidates, and after triggering the conditional SN Addition procedure it obtains the target candidate configurations enabling the MN to generate the CPC configuration in MN format to be merged with the CPC configuration from S-SN for S-SN target candidates (in SN format). The examples have shown the S-SN triggering two procedures, one is the SN Modification Required (where the CPC configuration for the S-SN, in SN format, is received) and an SN Change Required (requesting the MN to configure CPC). However, from the UE's perspective of receiving a single message with both CPC in SN format and MN format, there could also be a single message from the S-SN (e.g. an S-NODE CHANGE REQUIRED) that includes the information enabling the MN to request CPC to a neighbour SN, and the CPC configuration in SN format for the target candidates associated to the S-SN. In this option, the SCG MeasConfig can be included in the same SN RRC Reconfiguration that contains CPC (as generated by the SN).

The second set of embodiments can also or alternatively comprise a method **executed by a Master Node (MN).** The method can comprise any or more of the following steps or operations:
- receiving a message from the S-SN including CPC configuration in SN format. The message can, e.g., be an S-NODE MODIFICATION REQUIRED. The request can contain, e.g., measurements or a cell list for cell(s) in a different node or a list of T-SN node IDs;
   ∘ This message can contain the CPC configuration as generated in the previous step and associated to the target candidate cells of the S-SN. This CPC configuration can be in SN format.
   ∘ The CPC configuration can be in SN format and upon being received by the MN can be stored. Then, the MN can request CPC to/from target neighbour SN(s) indicated by the S-SN, and obtain the target candidate configurations, upon which it can generate the CPC configuration in MN format. Then, it can merge this CPC configuration in MN format with the stored CPC in SN format (as received by the S-SN).
- receiving a message from the S-SN including a request for CPC associated to target candidates in a neighbour SN. The message can be, e.g., S-NODE CHANGE REQUEST.
   ∘ The message from the S-SN requesting CPC to the MN (e.g. S-NODE CHANGE REQUIRED) can include the execution conditions mapped per target candidate cell, CPC related measConfig (e.g. the configuration of the measld(s), measObject(s), reportConfig(s) for CPC, and the association between meslD, reportConfig and MeasObject).
      ▪ The CPC related measConfig can be within an SCG RRCReconfiguration (denoted RRCReconfiguration***) to be provided to the UE in SN format and to be applied upon CPC configuration. In that case, upon reception of the RRCReconfiguration including CPC (in MN format) and including this RRCReconfiguration*** the UE can transmit to the MN an RRCReconfigurationComplete including within an RRCReconfigurationComplete*** to be forwarded from the MN to the S-SN.
   ∘ The message including the request can also include information enabling the MN to request for CPC towards the neighbour SN.
      ▪ For the T-SN candidate, the MN can trigger an SN Addition Request including a CPC indication to indicate that this is for CPC and receive an SN Addition Request Ack including the RRCReconfiguration** per target candidate cell from T-SN. That can later be used by the MN to generate the CPC in MN format to the UE (to be later merged with the CPC in SN format as provided by the S-SN for its own target candidates).
   ∘ In one alternative the two requests from S-SN, for intra-SN and inter-SN CPC, can be merged into one message. The second set of embodiments enables the MN to only configure the UE with CPC when it obtains the CPC configuration from S-SN for S-SN target candidates, and after triggering the conditional SN Addition procedure it obtains the target candidate configurations enabling the MN to generate the CPC configuration in MN format to be merged with the CPC configuration from S-SN for S-SN target candidates (in SN format). The examples have shown the S-SN triggering two procedures, one is the SN Modification Required and an SN Change Required. However, from the UE's perspective of receiving a single message with both CPC in SN format and MN format, there could also be a single message from the S-SN (e.g. an S-NODE CHANGE REQUIRED) that includes the information enabling the MN to request CPC to a neighbour SN, and the CPC in SN format for the target candidates associated to the S-SN.
- transmitting a request to a different SN than the source SN, for a target configuration for candidate target cell(s) for CPC;
- receiving a request acknowledge from a different SN than the source SN, containing target configuration for candidate target cell(s) for CPC;
- generating an *RRCReconfiguration* message to be provided to the UE. The *RRCReconfiguration* message can contain:
   ∘ CPC configuration for target candidate cells in a target SN other than source SN (i.e. in a neighbour SN), the CPC configuration can contain a conditional reconfiguration with conditions in the form of *measID* and a target configuration in an *RRCReconfiguration* to be applied when the condition(s) are fulfilled; and
   o an embedded *RRCReconfiguration* generated by the source SN with CPC configuration for target candidate cells in the source SN, the CPC configuration containing a conditional reconfiguration with conditions in the form of *measID* and a target configuration in an *RRCReconfiguration* to be applied when the condition(s) are fulfilled (which may also include the SCG MeasConfig including the CPC related measConfig for the target candidate cells for inter-SN CPC).
- transmitting the *RRCReconfiguration* with the CPC configuration for target candidate cells in T-SN in MN format and CPC configuration for target candidate cells in S-SN in SN format to the UE;
- receiving an *RRCReconfigurationComplete* from the UE, indicating that the conditional reconfiguration is completed;
   ∘ That may include an embedded *RRCReconfigurationComplete* to be provided to the S-SN (to acknowledge the CPC configuration in SN Format to the S-SN).
- receiving an *RRCReconfigurationComplete* (to the MN) with an embedded *RRCReconfigurationComplete* (to the T-SN where the target cell belongs) or alternatively an *ULInformationTransfer* (to the MN) with an embedded *RRCReconfigurationComplete* (to the source SN) from the UE when the condition(s) are fulfilled.

The second set of embodiments can also or alternatively comprise a method **executed by a target Secondary Node (T-SN).** The method can comprise any or more of the following steps or operations:
- receiving a request from an MN, for a target configuration for candidate target cell(s) for CPC; and/or
- transmitting a request acknowledge to the MN, containing target configuration for candidate target cell(s) for CPC;

The second set of embodiments can also or alternatively comprise a method **executed by a User Equipment (UE).** The method can comprise any or more of the following steps or operations:
- receiving the *RRCReconfiguration* with the CPC configuration for target candidate cells in T-SN in MN format and CPC configuration for target candidate cells in S-SN in SN format to the UE;
- transmitting an *RRCReconfigurationComplete* from the UE, indicating that the conditional reconfiguration is completed;
- monitoring the conditions; and/or
- transmitting an *RRCReconfigurationComplete* (to the MN) with an embedded *RRCReconfigurationComplete* (to the T-SN where the target cell belongs) or alternatively an *ULInformationTransfer* (to the MN) with an embedded *RRCReconfigurationComplete* (to the source SN) when the condition(s) are fulfilled.

### Embodiment Set 3 - Network merges CPAC configurations to MN format, SN sends the target configuration directly (UE receives CPC in MN format)

In a third set of embodiments, the MN can merge intra-SN CPC configurations and inter-SN CPAC configurations into one CPC configuration built by the MN, i.e. in MN format (to some extent as in the first set of embodiments). Herein, the S-SN can send a message to the MN including its target candidate configuration directly to the MN so that the MN does not need to request it later, i.e. the S-SN sends the RRCReconfiguration**, execution condition(s), and SCG measConfig for CPC, all per target candidate, and upon reception the MN can generate a CPC configuration in MN format. The message from S-SN to the MN can also include information enabling the MN to request CPC for a neighbour SN (e.g. candidate target cell information, like measurements and/or identifiers and T-SN identifiers); so that the MN can request CPC for the target candidate cells of a neighbour SN (with an SN Addition procedure, that is conditional), receive the target candidate configurations (RRCReconfiguration** per candidate) and generate the CPC in MN format for the neighbour SN target candidate(s), that is to be merged with the CPC in MN format that was generated for the S-SN target candidates. That CPC configuration in MN format, comprising target candidate cells from the S-SN and the neighbour SN, can then be provided to the UE.

These embodiments can be advantageous to the UE as all candidate target cells are configured in the same way in the RRC reconfiguration message and it is more optimized than the first set of embodiments as one network procedure is saved.

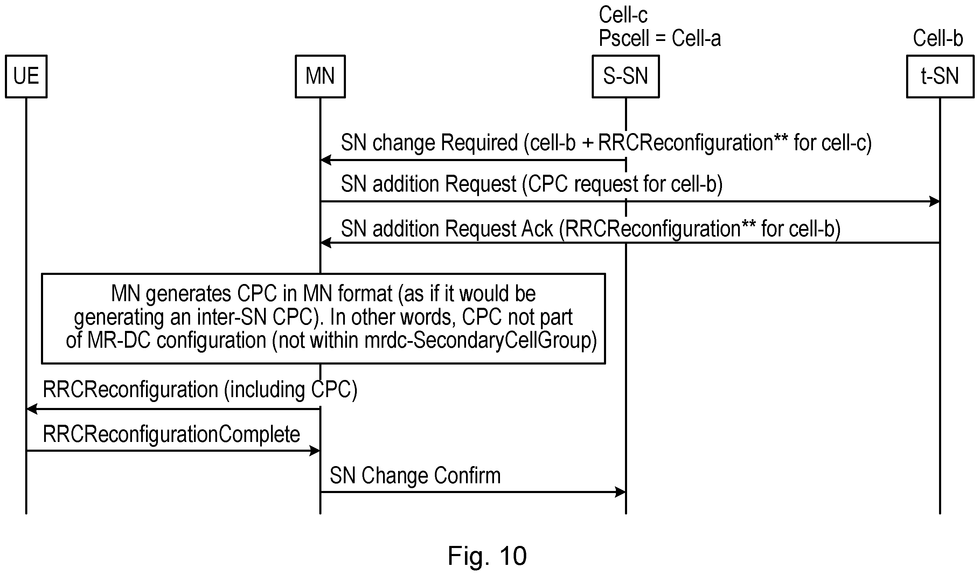

The signalling diagram in Figure 10 illustrates an example technique according to the third set of embodiments.

Thus, the third set of embodiments can comprise a method **executed by a source Secondary Node (S-SN).** The method can comprise any one or more of the following steps or operations:
- determining to configure CPAC with multiple target cells, where one or more target cells reside in the source SN and one or more target cells reside in a different SN;
   ∘ The determination can be based on measurements reported by the UE to the MN and forwarded to the SN (e.g. if only SRB1 is configured) or measurements reported directly the S-SN (e.g. via SRB3 or other mechanisms like based on L1 reporting). These measurements may be associated to cells that the S-SN identifies as its own cells (i.e. cells residing in the S-SN) and to neighbour SN(s). That identification can be done by identifying the physical cell identity associated to each cell measurement and the matching of a physical cell identity of the Source SN, and the matching of a physical cell identity of a Neighbour SN in its neighbour relation.
   ∘ Regarding the handling of UE capabilities related to CPC, several options are possible:
      ▪ In one option, the Source SN can obtain the UE capabilities and determine that the UE is capable of being configured with intra-SN CPC and inter-SN CPC simultaneously. That means the UE can be configured with target candidate cells of the S-SN (i.e. capable of intra-SN CPC) and of a neighbour SN (i.e. capable of inter-SN CPC). The capability could alternatively be translated as the UE being capable of being configured simultaneously with CPC in MN format and SN format.
         - There can be at least two types of capabilities associated to this, i.e. in a first capability the UE indicates that it supports intra-SN CPC, and in a second capability the UE indicates that it supports inter-SN CPC. The UE can report the capability(ies) to the network, e.g. upon initial registration, attach, etc. 'Two types' can refer to there being more than one capability per type, for example, for a given type there can be one capability for a Frequency Range 1 and another capability for a Frequency Range 2.
         - If this is the case, the follow up steps described in this third set of embodiments can be applied by the MN, where CPC is configured in MN format.
      ▪ In another option regarding the handling of UE capabilities related to CPC, several options are possible, the Source SN can obtain the UE capabilities and determine that the UE is capable of being configured only with intra-SN CPC. In that case, the S-SN can determine to only configure candidate target cells that reside in the S-SN.
      ▪ In another option regarding the handling of UE capabilities related to CPC, the Source SN can obtain the UE capabilities and determine that the UE is capable of being configured only with inter-SN CPC (equivalent to being capable of being configured with CPC in MN format). In that case, the S-SN can determine to only configure candidate target cells that do not reside in the S-SN, i.e. that reside in a neighbour SN.
      ▪ In another option regarding the handling of UE capabilities related to CPC, the Source SN can obtain the UE capabilities and determine that the UE is capable of being configured only with inter-SN CPC (equivalent to being capable of being configured with CPC in MN format). In that case, the S-SN can determine to configure candidate target cells according to the follow up steps, i.e. by generating a message in in MN format to the UE and obtaining the target cell configuration according to this third set of embodiments.
      ▪ In another option regarding the handling of UE capabilities related to CPC, a single capability can be defined to indicate that the UE is capable of handling simultaneously a CPC configuration MN format and in SN format.
         - If this is the case, the follow up steps described in this second set of embodiments can also be applied by the MN.
- transmitting a single message to the MN including an indication of CPC target candidate cells associated to the S-SN and a neighbour SN.
   ∘ The message can be, e.g., an S-NODE CHANGE REQUEST; alternatively, an S-NODE MODIFICATION REQUIRED message.
   ∘ The message can include any one or more of:
      ▪ Measurements or a cell list for cell(s) in a different node or a list of T-SN node IDs;
      ▪ For each target candidate of the S-SN, the S-SN can include the target candidate reconfiguration to be stored by the UE and possibly applied upon execution (denoted RRCReconfiguration**), the associated measld(s) to be monitored, and the SCG measConfig for CPC related measConfig wherein the measld(s) is configured (e.g. within an RRCReconfiguration*** in SN format to be applied by the UE upon reception). Upon reception the MN can generate a CPC configuration in MN format for the target candidate cells of the S-SN.
      ▪ A request to the MN for CPC associated to target candidates in a neighbour SN. It can also include the execution conditions mapped per target candidate cell, CPC related measConfig (e.g. the configuration of the measld(s), measObject(s), reportConfig(s) for CPC, and the association between meslD, reportConfig and MeasObject).
         - The CPC related measConfig can be within an SCG RRCReconfiguration (denoted RRCReconfiguration***) to be provided to the UE in SN format and to be applied upon CPC configuration. In that case, upon reception of the RRCReconfiguration including CPC (in MN format) and including this RRCReconfiguration***, the UE can transmit to the MN an RRCReconfigurationComplete including within an RRCReconfigurationComplete*** to be forwarded from the MN to the S-SN.
         - The SCG MeasConfig can be included in the same SN RRC Reconfiguration that contains CPC (as generated by the SN). That can simplify the MN actions in the sense that a single SN RRC Reconfiguration can be provided to the UE including the SCG measConfig for CPC (for the target candidates of neighbour SN) and the CPC configuration for the target candidates of S-SN.
      ▪ The message including the request can also include information enabling the MN to request for CPC towards the neighbour SN.
         - For the T-SN candidate, the MN can trigger an SN Addition Request including a CPC indication to indicate that this is for CPC and receive an SN Addition Request Ack including the RRCReconfiguration** per target candidate cell from T-SN. That can later be used by the MN to generate the CPC in MN format to the UE (to be later merged with the CPC in SN format as provided by the S-SN for its own target candidates).
      ▪ In this set of third embodiments, the two requests from S-SN, for intra-SN and inter-SN CPC, can be merged into one message. The MN can generate the CPC configuration from S-SN for S-SN target candidates, and after triggering the conditional SN Addition procedure, it can obtain the target candidate configurations enabling the MN to generate the CPC configuration in MN format to be merged with the CPC configuration generated for the candidates of the S-SN. A single procedure can also be used from the S-SN's perspective in this case, which is advantageous.

The third set of embodiments can also or alternatively comprise a method **executed by a Master Node (MN).** The method can comprise any or more of the following steps or operations:
- receiving a request from a source SN including an indication of CPC target candidate cells associated to the S-SN and a neighbour SN;
   ∘ The message can be, e.g., an S-NODE CHANGE REQUEST; alternatively, an S-NODE MODIFICATION REQUIRED message.
   ∘ The message can include any one or more of:
      ▪ Measurements or a cell list for cell(s) in a different node or a list of T-SN node IDs;
      ▪ For each target candidate of the S-SN, the target candidate reconfiguration to be stored by the UE and possibly applied upon execution (denoted RRCReconfiguration**), the associated measld(s) to be monitored, and the SCG measConfig for CPC related measConfig wherein the measld(s) is configured (e.g. within an RRCReconfiguration*** in SN format to be applied by the UE upon reception). Upon reception the MN can generate a CPC configuration in MN format for the target candidate cells of the S-SN.
      ▪ A request for CPC associated to target candidates in a neighbour SN. It can also include the execution conditions mapped per target candidate cell, CPC related measConfig (e.g. the configuration of the measld(s), measObject(s), reportConfig(s) for CPC, and the association between meslD, reportConfig and MeasObject).
         - The CPC related measConfig can be within an SCG RRCReconfiguration (denoted RRCReconfiguration***) to be provided to the UE in SN format and to be applied upon CPC configuration. In that case, upon reception of the RRCReconfiguration including CPC (in MN format) and including this RRCReconfiguration***, the UE can transmit to the MN an RRCReconfigurationComplete including within an RRCReconfigurationComplete*** to be forwarded from the MN to the S-SN.
         - The SCG MeasConfig can be included in the same SN RRC Reconfiguration that contains CPC (as generated by the SN). That can simplify the MN actions in the sense that a single SN RRC Reconfiguration can be provided to the UE including the SCG measConfig for CPC (for the target candidates of neighbour SN) and the CPC configuration for the target candidates of S-SN.
      ▪ The message including the request can also include information enabling the MN to request for CPC towards the neighbour SN.
         - For the T-SN candidate, the MN can trigger an SN Addition Request including a CPC indication to indicate that this is for CPC and receive an SN Addition Request Ack including the RRCReconfiguration** per target candidate cell from T-SN. That can later be used by the MN to generate the CPC in MN format to the UE (to be later merged with the CPC in SN format as provided by the S-SN for its own target candidates).
      ▪ In this set of third embodiments, the two requests from S-SN, for intra-SN and inter-SN CPC, can be merged into one message. The MN can generate the CPC configuration from S-SN for S-SN target candidates, and after triggering the conditional SN Addition procedure it can obtain the target candidate configurations enabling the MN to generate the CPC configuration in MN format to be merged with the CPC configuration generated for the candidates of the S-SN. A single procedure can also be used from the S-SN's perspective in this case, which can be advantageous.
- transmitting a request to a different SN than the source SN, for a target configuration for candidate target cell(s) for CPAC;
- receiving a request acknowledge from a different SN than the source SN, containing the target configuration in an *RRCReconfiguration* message to be applied when the condition(s) are fulfilled and the *measID* and possibly the SCG *measConfig;*
- generating a CPAC configuration for all candidate target cells in an *RRCReconfiguration* message. The CPAC configuration containing a conditional reconfiguration with conditions in the form of *measID* and a target configuration in an *RRCReconfiguration* to be applied when the condition(s) are fulfilled;
- transmitting an *RRCReconfiguration* with the conditional reconfiguration for CPAC to the UE;
- receiving an *RRCReconfigurationComplete* from the UE, indicating that the conditional reconfiguration is completed; and/or
- receiving an *RRCReconfigurationComplete* (to the MN) with an embedded *RRCReconfigurationComplete* (to the SN where the target cell belongs) from the UE when the condition(s) are fulfilled.

The third set of embodiments can also or alternatively comprise a method **executed by a target Secondary Node (T-SN).** The method can comprise any or more of the following steps or operations:
- receiving a request from an MN, for a target configuration for candidate target cell(s) for CPAC; and/or
- transmitting a request acknowledge to the MN, containing target configuration for candidate target cell(s) for CPAC;

The third set of embodiments can also or alternatively comprise a method **executed by a User Equipment (UE).** The method can comprise any or more of the following steps or operations:
- receiving an *RRCReconfiguration* with conditional reconfiguration for CPAC from an MN;
- transmitting an *RRCReconfigurationComplete* to the MN, indicating that the conditional reconfiguration is completed.
- monitoring the conditions; and/or
- transmitting an *RRCReconfigurationComplete* (to the MN) with an embedded *RRCReconfigurationComplete* (to the SN where the target cell belongs) when the condition(s) are fulfilled.

### Embodiment Set 4 - Network configures CPAC in two different procedures to the UE (UE receives CPC in MN and SN formats)

In a fourth set of embodiments, the MN can configure intra-SN CPC configurations (in SN format) and inter-SN CPC configurations (in MN format) in two different procedures to the UE. In other words, the S-SN can determine to configure CPC for a UE for target candidate cells associated to the S-SN and target candidate cells associated to a neighbour SN (denoted t-SN), e.g. based on measurement reports for these cells and based on the UE capability(ies), reported by the UE, indicating that the UE is capable of being configured with CPC configuration in SN format and is capable of being configured with CPC configuration in MN format. The S-SN can trigger two procedures, one for inter-SN CPC and one for intra-SN CPC. The MN can receive each request and configure the UE independently with these procedures, with CPC in MN format and CPC in SN format.

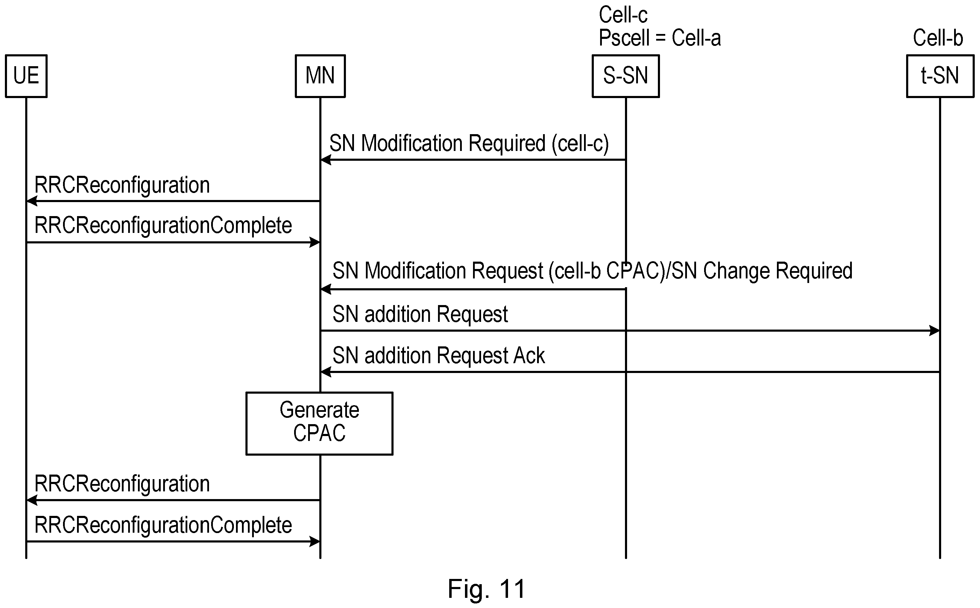

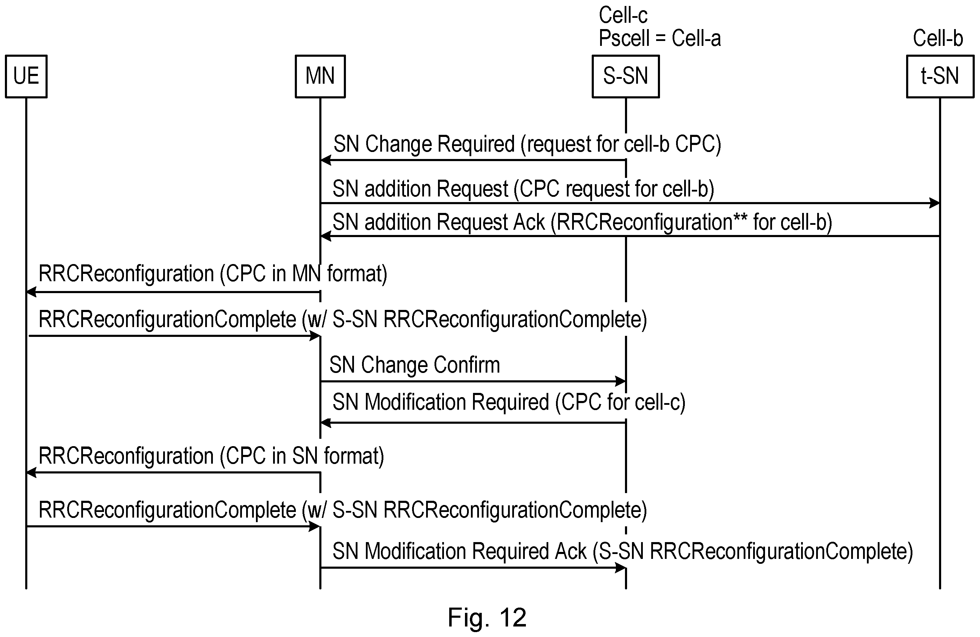

Figures 11 and 12 below illustrate exemplary techniques according to the fourth set of embodiments.

Thus, the fourth set of embodiments can comprise a method **executed by a source Secondary Node (S-SN).** The method can comprise any one or more of the following steps or operations:
- determining to configure CPAC with multiple target cells, where one or more target cells reside in the source SN and one or more target cells reside in a different SN;
   ∘ The determination can be based on measurements reported by the UE to the MN and forwarded to the SN (e.g. if only SRB1 is configured) or measurements reported directly the S-SN (e.g. via SRB3 or other mechanisms like based on L1 reporting). These measurements may be associated to cells that the S-SN identifies as its own cells (i.e. cells residing in the S-SN) and to neighbour SN(s). That identification can be done by identifying the physical cell identity associated to each cell measurement and the matching of a physical cell identity of the Source SN, and the matching of a physical cell identity of a Neighbour SN in its neighbour relation.
   ∘ Regarding the handling of UE capabilities related to CPC, several options are possible:
      ▪ In one option, the Source SN can obtain the UE capabilities and determine that the UE is capable of being configured with intra-SN CPC and inter-SN CPC simultaneously. That means the UE can be configured with target candidate cells of the S-SN (i.e. capable of intra-SN CPC) and of a neighbour SN (i.e. capable of inter-SN CPC). The capability could alternatively be translated as the UE being capable of being configured simultaneously with CPC in MN format and SN format.
         - There can be at least two types of capabilities associated to this, i.e. in a first capability the UE indicates that it supports intra-SN CPC, and in a second capability the UE indicates that it supports inter-SN CPC. The UE reports the capability(ies) to the network, e.g., upon initial registration, attach, etc. 'Two types' can refer to there being more than one capability per type, for example, for a given type there can be one capability for a Frequency Range 1 and another capability for a Frequency Range 2.
         - If this is the case, the follow up steps described in this fourth set of embodiments can be applied by the MN (as the UE would be capable of handling simultaneously CPC configuration in both SN and MN formats), and as the follow up steps rely on configuring the UE with CPC in both formats.
      ▪ In another option regarding the handling of UE capabilities related to CPC, the Source SN can obtain the UE capabilities and determine that the UE is capable of being configured only with intra-SN CPC. In that case, the S-SN can determine to only configure candidate target cells that reside in the S-SN;
      ▪ In another option regarding the handling of UE capabilities related to CPC, the Source SN can obtain the UE capabilities and determine that the UE is capable of being configured only with inter-SN CPC (equivalent to being capable of being configured with CPC in MN format). In that case, the S-SN can determine to only configure candidate target cells that do not reside in the S-SN, i.e. that reside in a neighbour SN.
      ▪ In another option regarding the handling of UE capabilities related to CPC, a single capability can be defined to indicate that the UE is capable of handling simultaneously a CPC configuration MN format and in SN format.
         - If this is the case, the follow up steps described in this fourth set of embodiments can also be applied by the MN.
- transmitting a first request to a Master Node (MN) to prepare a conditional SN addition (CPAC). The request can, e.g., be S-NODE MODIFICATION REQUIRED. The request containing the CPAC configuration for cell(s) in the own (S-SN) node. The CPAC configuration for own cells consisting of the target configuration in an *RRCReconfiguration* message to be applied when the condition(s) are fulfilled and the *measID* and possibly the SCG *measConfig.*
- transmitting a second request to a Master Node (MN) to prepare a conditional SN addition (CPAC). The request can, e.g., be S-NODE MODIFICATION REQUIRED or S-NODE CHANGE REQUEST. The request containing, e.g., measurements or a cell list for cell(s) in a different node or a list of T-SN node ID(s).

The fourth set of embodiments can also or alternatively comprise a method **executed by a Master Node (MN).** The method can comprise any one or more of the following steps or operations:
- receiving a first request from a source SN to prepare a conditional SN addition (CPAC) for candidate target cells in the same source SN. The request can, e.g., be S-NODE MODIFICATION REQUIRED. The request containing the CPAC configuration for cell(s) in the own (S-SN) node. The CPAC configuration for own cells consisting of the target configuration in an *RRCReconfiguration* message to be applied when the condition(s) are fulfilled and the *measID* and possibly the SCG *measConfig;*
- receiving a second request from a source SN to prepare a conditional SN addition (CPAC) for candidate target cells in a different node, a T-SN. The request can, e.g., be S-NODE MODIFICATION REQUIRED or S-NODE CHANGE REQUEST. The request containing, e.g., measurements or a cell list for cell(s) in a different node or a list of T-SN node ID(s). In one alternative the two requests can be merged into one request message from the S-SN.
- transmitting an *RRCReconfiguration* with the conditional reconfiguration for CPAC for target candidate cell(s) in the S-SN to the UE;
- receiving an *RRCReconfigurationComplete* from the UE, indicating that the conditional reconfiguration for target candidate cell(s) in the S-SN is completed;
- transmitting a request to a different SN than the source SN, for a target configuration for candidate target cell(s) for CPAC;
- receiving a request acknowledge from a different SN than the source SN, containing the target configuration in an *RRCReconfiguration* message to be applied when the condition(s) are fulfilled and the *measID* and possibly the SCG *measConfig;*
- generating a CPAC configuration for all candidate target cells in an *RRCReconfiguration* message. The CPAC configuration containing a conditional reconfiguration with conditions in the form of *measID* and a target configuration in an *RRCReconfiguration* to be applied when the condition(s) are fulfilled.
- transmitting an *RRCReconfiguration* with the conditional reconfiguration for CPAC for target candidate cell(s) in a T-SN to the UE;
- receiving an *RRCReconfigurationComplete* from the UE, indicating that the conditional reconfiguration for target candidate cell(s) in a T-SN is completed; and/or
- receiving an *RRCReconfigurationComplete* (to the MN) with an embedded *RRCReconfigurationComplete* (to the T-SN where the target cell belongs) or alternatively an *ULInformationTransfer* (to the MN) with an embedded *RRCReconfigurationComplete* (to the source SN) from the UE when the condition(s) are fulfilled.

The fourth set of embodiments can also or alternatively comprise a method **executed by a target Secondary Node (T-SN).** The method can comprise any one or more of the following steps or operations:
- receiving a request from an MN, for a target configuration for candidate target cell(s) for CPAC; and/or
- transmitting a request acknowledge to the MN, containing target configuration for candidate target cell(s) for CPAC.

The fourth set of embodiments can also or alternatively comprise a method **executed by a User Equipment (UE).** The method can comprise any one or more of the following steps or operations:
- receiving an *RRCReconfiguration* with the conditional reconfiguration for CPAC for target candidate cell(s) in the S-SN;
- transmitting an *RRCReconfigurationComplete* from the UE, indicating that the conditional reconfiguration for target candidate cell(s) in the S-SN is completed;
- receiving an *RRCReconfiguration* with conditional reconfiguration for CPAC for target candidate cell(s) in a T-SN to the UE from the MN;
- transmitting an *RRCReconfigurationComplete* to the MN, indicating that the conditional reconfiguration for target candidate cell(s) in a T-SN is completed;
- monitoring the conditions; and/or
- transmitting an RRCReconfigurationComplete (to the MN) with an embedded RRCReconfigurationComplete (to the T-SN where the target cell belongs) or alternatively an ULInformationTransfer (to the MN) with an embedded RRCReconfigurationComplete (to the source SN) from the UE when the condition(s) are fulfilled.

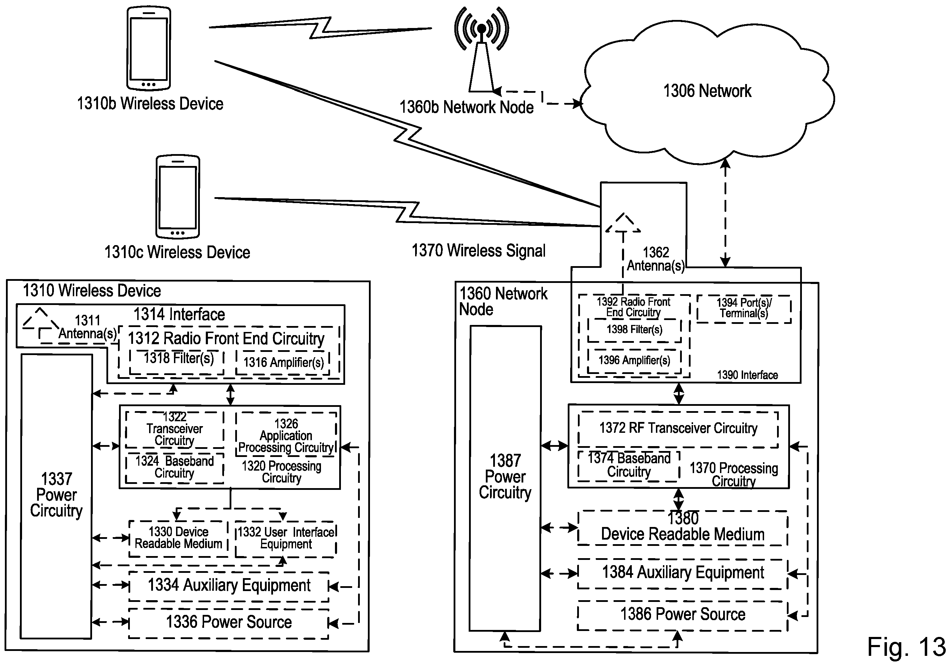

Although the subject matter described herein may be implemented in any appropriate type of system using any suitable components, the embodiments disclosed herein are described in relation to a wireless network, such as the example wireless network illustrated in Figure 13. For simplicity, the wireless network of Figure 13 only depicts network 1306, network nodes 1360 and 1360b, and WDs 1310, 1310b, and 1310c. In practice, a wireless network may further include any additional elements suitable to support communication between wireless devices or between a wireless device and another communication device, such as a landline telephone, a service provider, or any other network node or end device. Of the illustrated components, network node 1360 and wireless device (WD) 1310 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1306 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1360 and WD 1310 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 13, network node 1360 includes processing circuitry 1370, device readable medium 1380, interface 1390, auxiliary equipment 1384, power source 1386, power circuitry 1387, and antenna 1362. Although network node 1360 illustrated in the example wireless network of Figure 13 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1360 are depicted as single boxes located within a larger box, or nested within multiple boxes, in practice, a network node may comprise multiple different physical components that make up a single illustrated component (e.g., device readable medium 1380 may comprise multiple separate hard drives as well as multiple RAM modules).

Similarly, network node 1360 may be composed of multiple physically separate components (e.g., a NodeB component and a RNC component, or a BTS component and a BSC component, etc.), which may each have their own respective components. In certain scenarios in which network node 1360 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1360 may be configured to support multiple radio access technologies (RATs). In such embodiments, some components may be duplicated (e.g., separate device readable medium 1380 for the different RATs) and some components may be reused (e.g., the same antenna 1362 may be shared by the RATs). Network node 1360 may also include multiple sets of the various illustrated components for different wireless technologies integrated into network node 1360, such as, for example, GSM, WCDMA, LTE, NR, WiFi, or Bluetooth wireless technologies. These wireless technologies may be integrated into the same or different chip or set of chips and other components within network node 1360.

Processing circuitry 1370 is configured to perform any determining, calculating, or similar operations (e.g., certain obtaining operations) described herein as being provided by a network node. These operations performed by processing circuitry 1370 may include processing information obtained by processing circuitry 1370 by, for example, converting the obtained information into other information, comparing the obtained information or converted information to information stored in the network node, and/or performing one or more operations based on the obtained information or converted information, and as a result of said processing making a determination.

Processing circuitry 1370 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1360 components, such as device readable medium 1380, network node 1360 functionality. For example, processing circuitry 1370 may execute instructions stored in device readable medium 1380 or in memory within processing circuitry 1370. Such functionality may include providing any of the various wireless features, functions, or benefits discussed herein. In some embodiments, processing circuitry 1370 may include a system on a chip (SOC).

In some embodiments, processing circuitry 1370 may include one or more of radio frequency (RF) transceiver circuitry 1372 and baseband processing circuitry 1374. In some embodiments, radio frequency (RF) transceiver circuitry 1372 and baseband processing circuitry 1374 may be on separate chips (or sets of chips), boards, or units, such as radio units and digital units. In alternative embodiments, part or all of RF transceiver circuitry 1372 and baseband processing circuitry 1374 may be on the same chip or set of chips, boards, or units.

In certain embodiments, some or all of the functionality described herein as being provided by a network node, base station, eNB or other such network device may be performed by processing circuitry 1370 executing instructions stored on device readable medium 1380 or memory within processing circuitry 1370. In alternative embodiments, some or all of the functionality may be provided by processing circuitry 1370 without executing instructions stored on a separate or discrete device readable medium, such as in a hard-wired manner. In any of those embodiments, whether executing instructions stored on a device readable storage medium or not, processing circuitry 1370 can be configured to perform the described functionality. The benefits provided by such functionality are not limited to processing circuitry 1370 alone or to other components of network node 1360, but are enjoyed by network node 1360 as a whole, and/or by end users and the wireless network generally.

Device readable medium 1380 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1370. Device readable medium 1380 may store any suitable instructions, data or information, including a computer program, software, an application including one or more of logic, rules, code, tables, etc. and/or other instructions capable of being executed by processing circuitry 1370 and, utilized by network node 1360. Device readable medium 1380 may be used to store any calculations made by processing circuitry 1370 and/or any data received via interface 1390. In some embodiments, processing circuitry 1370 and device readable medium 1380 may be considered to be integrated.

Interface 1390 is used in the wired or wireless communication of signalling and/or data between network node 1360, network 1306, and/or WDs 1310. As illustrated, interface 1390 comprises port(s)/terminal(s) 1394 to send and receive data, for example to and from network 1306 over a wired connection. Interface 1390 also includes radio front end circuitry 1392 that may be coupled to, or in certain embodiments a part of, antenna 1362. Radio front end circuitry 1392 comprises filters 1398 and amplifiers 1396. Radio front end circuitry 1392 may be connected to antenna 1362 and processing circuitry 1370. Radio front end circuitry may be configured to condition signals communicated between antenna 1362 and processing circuitry 1370. Radio front end circuitry 1392 may receive digital data that is to be sent out to other network nodes or WDs via a wireless connection. Radio front end circuitry 1392 may convert the digital data into a radio signal having the appropriate channel and bandwidth parameters using a combination of filters 1398 and/or amplifiers 1396. The radio signal may then be transmitted via antenna 1362. Similarly, when receiving data, antenna 1362 may collect radio signals which are then converted into digital data by radio front end circuitry 1392. The digital data may be passed to processing circuitry 1370. In other embodiments, the interface may comprise different components and/or different combinations of components.

In certain alternative embodiments, network node 1360 may not include separate radio front end circuitry 1392, instead, processing circuitry 1370 may comprise radio front end circuitry and may be connected to antenna 1362 without separate radio front end circuitry 1392. Similarly, in some embodiments, all or some of RF transceiver circuitry 1372 may be considered a part of interface 1390. In still other embodiments, interface 1390 may include one or more ports or terminals 1394, radio front end circuitry 1392, and RF transceiver circuitry 1372, as part of a radio unit (not shown), and interface 1390 may communicate with baseband processing circuitry 1374, which is part of a digital unit (not shown).

Antenna 1362 may include one or more antennas, or antenna arrays, configured to send and/or receive wireless signals. Antenna 1362 may be coupled to radio front end circuitry 1392 and may be any type of antenna capable of transmitting and receiving data and/or signals wirelessly. In some embodiments, antenna 1362 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1362 may be separate from network node 1360 and may be connectable to network node 1360 through an interface or port.

Antenna 1362, interface 1390, and/or processing circuitry 1370 may be configured to perform any receiving operations and/or certain obtaining operations described herein as being performed by a network node. Any information, data and/or signals may be received from a wireless device, another network node and/or any other network equipment. Similarly, antenna 1362, interface 1390, and/or processing circuitry 1370 may be configured to perform any transmitting operations described herein as being performed by a network node. Any information, data and/or signals may be transmitted to a wireless device, another network node and/or any other network equipment.

Power circuitry 1387 may comprise, or be coupled to, power management circuitry and is configured to supply the components of network node 1360 with power for performing the functionality described herein. Power circuitry 1387 may receive power from power source 1386. Power source 1386 and/or power circuitry 1387 may be configured to provide power to the various components of network node 1360 in a form suitable for the respective components (e.g., at a voltage and current level needed for each respective component). Power source 1386 may either be included in, or external to, power circuitry 1387 and/or network node 1360. For example, network node 1360 may be connectable to an external power source (e.g., an electricity outlet) via an input circuitry or interface such as an electrical cable, whereby the external power source supplies power to power circuitry 1387. As a further example, power source 1386 may comprise a source of power in the form of a battery or battery pack which is connected to, or integrated in, power circuitry 1387. The battery may provide backup power should the external power source fail. Other types of power sources, such as photovoltaic devices, may also be used.

Alternative embodiments of network node 1360 may include additional components beyond those shown in Figure 13 that may be responsible for providing certain aspects of the network node's functionality, including any of the functionality described herein and/or any functionality necessary to support the subject matter described herein. For example, network node 1360 may include user interface equipment to allow input of information into network node 1360 and to allow output of information from network node 1360. This may allow a user to perform diagnostic, maintenance, repair, and other administrative functions for network node 1360.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as a machine type communication (MTC) device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1310 includes antenna 1311, interface 1314, processing circuitry 1320, device readable medium 1330, user interface equipment 1332, auxiliary equipment 1334, power source 1336 and power circuitry 1337. WD 1310 may include multiple sets of one or more of the illustrated components for different wireless technologies supported by WD 1310, such as, for example, GSM, WCDMA, LTE, NR, WiFi, WiMAX, or Bluetooth wireless technologies, just to mention a few. These wireless technologies may be integrated into the same or different chips or set of chips as other components within WD 1310.

Antenna 1311 may include one or more antennas or antenna arrays, configured to send and/or receive wireless signals, and is connected to interface 1314. In certain alternative embodiments, antenna 1311 may be separate from WD 1310 and be connectable to WD 1310 through an interface or port. Antenna 1311, interface 1314, and/or processing circuitry 1320 may be configured to perform any receiving or transmitting operations described herein as being performed by a WD. Any information, data and/or signals may be received from a network node and/or another WD. In some embodiments, radio front end circuitry and/or antenna 1311 may be considered an interface.

As illustrated, interface 1314 comprises radio front end circuitry 1312 and antenna 1311. Radio front end circuitry 1312 comprise one or more filters 1318 and amplifiers 1316. Radio front end circuitry 1312 is connected to antenna 1311 and processing circuitry 1320, and is configured to condition signals communicated between antenna 1311 and processing circuitry 1320. Radio front end circuitry 1312 may be coupled to or a part of antenna 1311. In some embodiments, WD 1310 may not include separate radio front end circuitry 1312; rather, processing circuitry 1320 may comprise radio front end circuitry and may be connected to antenna 1311. Similarly, in some embodiments, some or all of RF transceiver circuitry 1322 may be considered a part of interface 1314. Radio front end circuitry 1312 may receive digital data that is to be sent out to other network nodes or WDs via a wireless connection. Radio front end circuitry 1312 may convert the digital data into a radio signal having the appropriate channel and bandwidth parameters using a combination of filters 1318 and/or amplifiers 1316. The radio signal may then be transmitted via antenna 1311. Similarly, when receiving data, antenna 1311 may collect radio signals which are then converted into digital data by radio front end circuitry 1312. The digital data may be passed to processing circuitry 1320. In other embodiments, the interface may comprise different components and/or different combinations of components.

Processing circuitry 1320 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1310 components, such as device readable medium 1330, WD 1310 functionality. Such functionality may include providing any of the various wireless features or benefits discussed herein. For example, processing circuitry 1320 may execute instructions stored in device readable medium 1330 or in memory within processing circuitry 1320 to provide the functionality disclosed herein.

As illustrated, processing circuitry 1320 includes one or more of RF transceiver circuitry 1322, baseband processing circuitry 1324, and application processing circuitry 1326. In other embodiments, the processing circuitry may comprise different components and/or different combinations of components. In certain embodiments processing circuitry 1320 of WD 1310 may comprise a SOC. In some embodiments, RF transceiver circuitry 1322, baseband processing circuitry 1324, and application processing circuitry 1326 may be on separate chips or sets of chips. In alternative embodiments, part or all of baseband processing circuitry 1324 and application processing circuitry 1326 may be combined into one chip or set of chips, and RF transceiver circuitry 1322 may be on a separate chip or set of chips. In still alternative embodiments, part or all of RF transceiver circuitry 1322 and baseband processing circuitry 1324 may be on the same chip or set of chips, and application processing circuitry 1326 may be on a separate chip or set of chips. In yet other alternative embodiments, part or all of RF transceiver circuitry 1322, baseband processing circuitry 1324, and application processing circuitry 1326 may be combined in the same chip or set of chips. In some embodiments, RF transceiver circuitry 1322 may be a part of interface 1314. RF transceiver circuitry 1322 may condition RF signals for processing circuitry 1320.

In certain embodiments, some or all of the functionality described herein as being performed by a WD may be provided by processing circuitry 1320 executing instructions stored on device readable medium 1330, which in certain embodiments may be a computer-readable storage medium. In alternative embodiments, some or all of the functionality may be provided by processing circuitry 1320 without executing instructions stored on a separate or discrete device readable storage medium, such as in a hard-wired manner. In any of those particular embodiments, whether executing instructions stored on a device readable storage medium or not, processing circuitry 1320 can be configured to perform the described functionality. The benefits provided by such functionality are not limited to processing circuitry 1320 alone or to other components of WD 1310, but are enjoyed by WD 1310 as a whole, and/or by end users and the wireless network generally.

Processing circuitry 1320 may be configured to perform any determining, calculating, or similar operations (e.g., certain obtaining operations) described herein as being performed by a WD. These operations, as performed by processing circuitry 1320, may include processing information obtained by processing circuitry 1320 by, for example, converting the obtained information into other information, comparing the obtained information or converted information to information stored by WD 1310, and/or performing one or more operations based on the obtained information or converted information, and as a result of said processing making a determination.

Device readable medium 1330 may be operable to store a computer program, software, an application including one or more of logic, rules, code, tables, etc. and/or other instructions capable of being executed by processing circuitry 1320. Device readable medium 1330 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1320. In some embodiments, processing circuitry 1320 and device readable medium 1330 may be considered to be integrated.

User interface equipment 1332 may provide components that allow for a human user to interact with WD 1310. Such interaction may be of many forms, such as visual, audial, tactile, etc. User interface equipment 1332 may be operable to produce output to the user and to allow the user to provide input to WD 1310. The type of interaction may vary depending on the type of user interface equipment 1332 installed in WD 1310. For example, if WD 1310 is a smart phone, the interaction may be via a touch screen; if WD 1310 is a smart meter, the interaction may be through a screen that provides usage (e.g., the number of gallons used) or a speaker that provides an audible alert (e.g., if smoke is detected). User interface equipment 1332 may include input interfaces, devices and circuits, and output interfaces, devices and circuits. User interface equipment 1332 is configured to allow input of information into WD 1310, and is connected to processing circuitry 1320 to allow processing circuitry 1320 to process the input information. User interface equipment 1332 may include, for example, a microphone, a proximity or other sensor, keys/buttons, a touch display, one or more cameras, a USB port, or other input circuitry. User interface equipment 1332 is also configured to allow output of information from WD 1310, and to allow processing circuitry 1320 to output information from WD 1310. User interface equipment 1332 may include, for example, a speaker, a display, vibrating circuitry, a USB port, a headphone interface, or other output circuitry. Using one or more input and output interfaces, devices, and circuits, of user interface equipment 1332, WD 1310 may communicate with end users and/or the wireless network, and allow them to benefit from the functionality described herein.

Auxiliary equipment 1334 is operable to provide more specific functionality which may not be generally performed by WDs. This may comprise specialized sensors for doing measurements for various purposes, interfaces for additional types of communication such as wired communications etc. The inclusion and type of components of auxiliary equipment 1334 may vary depending on the embodiment and/or scenario.

Power source 1336 may, in some embodiments, be in the form of a battery or battery pack. Other types of power sources, such as an external power source (e.g., an electricity outlet), photovoltaic devices or power cells, may also be used. WD 1310 may further comprise power circuitry 1337 for delivering power from power source 1336 to the various parts of WD 1310 which need power from power source 1336 to carry out any functionality described or indicated herein. Power circuitry 1337 may in certain embodiments comprise power management circuitry. Power circuitry 1337 may additionally or alternatively be operable to receive power from an external power source; in which case WD 1310 may be connectable to the external power source (such as an electricity outlet) via input circuitry or an interface such as an electrical power cable. Power circuitry 1337 may also in certain embodiments be operable to deliver power from an external power source to power source 1336. This may be, for example, for the charging of power source 1336. Power circuitry 1337 may perform any formatting, converting, or other modification to the power from power source 1336 to make the power suitable for the respective components of WD 1310 to which power is supplied.

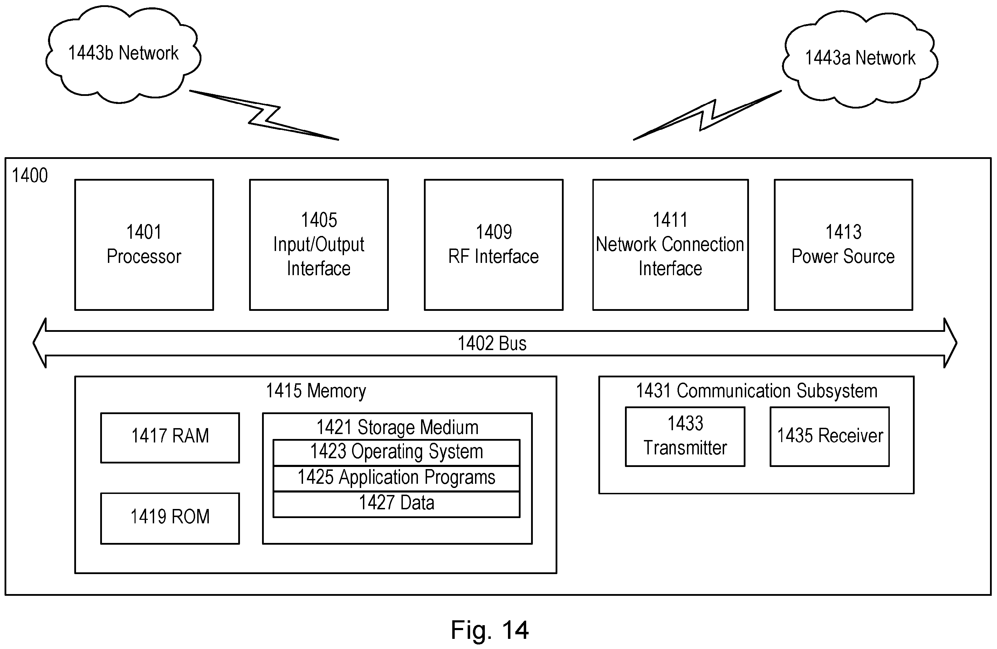

Figure 14 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1400 may be any UE identified by the 3^{rd} Generation Partnership Project (3GPP), including a NB-loT UE, a machine type communication (MTC) UE, and/or an enhanced MTC (eMTC) UE. UE 1400, as illustrated in Figure 14, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 14 is a UE, the components discussed herein are equally applicable to a WD, and vice-versa.

In Figure 14, UE 1400 includes processing circuitry 1401 that is operatively coupled to input/output interface 1405, radio frequency (RF) interface 1409, network connection interface 1411, memory 1415 including random access memory (RAM) 1417, read-only memory (ROM) 1419, and storage medium 1421 or the like, communication subsystem 1431, power source 1433, and/or any other component, or any combination thereof. Storage medium 1421 includes operating system 1423, application program 1425, and data 1427. In other embodiments, storage medium 1421 may include other similar types of information. Certain UEs may utilize all of the components shown in Figure 14, or only a subset of the components. The level of integration between the components may vary from one UE to another UE. Further, certain UEs may contain multiple instances of a component, such as multiple processors, memories, transceivers, transmitters, receivers, etc.

In Figure 14, processing circuitry 1401 may be configured to process computer instructions and data. Processing circuitry 1401 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1401 may include two central processing units (CPUs). Data may be information in a form suitable for use by a computer.

In the depicted embodiment, input/output interface 1405 may be configured to provide a communication interface to an input device, output device, or input and output device. UE 1400 may be configured to use an output device via input/output interface 1405. An output device may use the same type of interface port as an input device. For example, a USB port may be used to provide input to and output from UE 1400. The output device may be a speaker, a sound card, a video card, a display, a monitor, a printer, an actuator, an emitter, a smartcard, another output device, or any combination thereof. UE 1400 may be configured to use an input device via input/output interface 1405 to allow a user to capture information into UE 1400. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 14, RF interface 1409 may be configured to provide a communication interface to RF components such as a transmitter, a receiver, and an antenna. Network connection interface 1411 may be configured to provide a communication interface to network 1443a. Network 1443a may encompass wired and/or wireless networks such as a local-area network (LAN), a wide-area network (WAN), a computer network, a wireless network, a telecommunications network, another like network or any combination thereof. For example, network 1443a may comprise a Wi-Fi network. Network connection interface 1411 may be configured to include a receiver and a transmitter interface used to communicate with one or more other devices over a communication network according to one or more communication protocols, such as Ethernet, TCP/IP, SONET, ATM, or the like. Network connection interface 1411 may implement receiver and transmitter functionality appropriate to the communication network links (e.g., optical, electrical, and the like). The transmitter and receiver functions may share circuit components, software or firmware, or alternatively may be implemented separately.

RAM 1417 may be configured to interface via bus 1402 to processing circuitry 1401 to provide storage or caching of data or computer instructions during the execution of software programs such as the operating system, application programs, and device drivers. ROM 1419 may be configured to provide computer instructions or data to processing circuitry 1401. For example, ROM 1419 may be configured to store invariant low-level system code or data for basic system functions such as basic input and output (I/O), startup, or reception of keystrokes from a keyboard that are stored in a non-volatile memory. Storage medium 1421 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1421 may be configured to include operating system 1423, application program 1425 such as a web browser application, a widget or gadget engine or another application, and data file 1427. Storage medium 1421 may store, for use by UE 1400, any of a variety of various operating systems or combinations of operating systems.

Storage medium 1421 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1421 may allow UE 1400 to access computer-executable instructions, application programs or the like, stored on transitory or non-transitory memory media, to off-load data, or to upload data. An article of manufacture, such as one utilizing a communication system may be tangibly embodied in storage medium 1421, which may comprise a device readable medium.

In Figure 14, processing circuitry 1401 may be configured to communicate with network 1443b using communication subsystem 1431. Network 1443a and network 1443b may be the same network or networks or different network or networks. Communication subsystem 1431 may be configured to include one or more transceivers used to communicate with network 1443b. For example, communication subsystem 1431 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1433 and/or receiver 1435 to implement transmitter or receiver functionality, respectively, appropriate to the RAN links (e.g., frequency allocations and the like). Further, transmitter 1433 and receiver 1435 of each transceiver may share circuit components, software or firmware, or alternatively may be implemented separately.

In the illustrated embodiment, the communication functions of communication subsystem 1431 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1431 may include cellular communication, Wi-Fi communication, Bluetooth communication, and GPS communication. Network 1443b may encompass wired and/or wireless networks such as a local-area network (LAN), a wide-area network (WAN), a computer network, a wireless network, a telecommunications network, another like network or any combination thereof. For example, network 1443b may be a cellular network, a Wi-Fi network, and/or a near-field network. Power source 1413 may be configured to provide alternating current (AC) or direct current (DC) power to components of UE 1400.

The features, benefits and/or functions described herein may be implemented in one of the components of UE 1400 or partitioned across multiple components of UE 1400. Further, the features, benefits, and/or functions described herein may be implemented in any combination of hardware, software or firmware. In one example, communication subsystem 1431 may be configured to include any of the components described herein. Further, processing circuitry 1401 may be configured to communicate with any of such components over bus 1402. In another example, any of such components may be represented by program instructions stored in memory that when executed by processing circuitry 1401 perform the corresponding functions described herein. In another example, the functionality of any of such components may be partitioned between processing circuitry 1401 and communication subsystem 1431. In another example, the non-computationally intensive functions of any of such components may be implemented in software or firmware and the computationally intensive functions may be implemented in hardware.

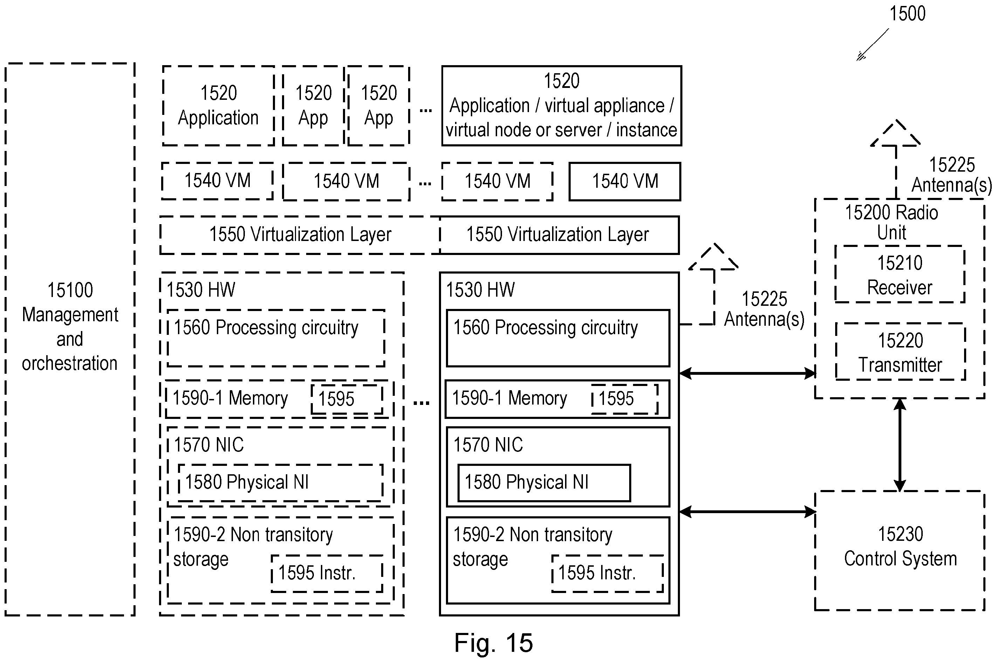

Figure 15 is a schematic block diagram illustrating a virtualization environment 1500 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1500 hosted by one or more of hardware nodes 1530. Further, in embodiments in which the virtual node is not a radio access node or does not require radio connectivity (e.g., a core network node), then the network node may be entirely virtualized.

The functions may be implemented by one or more applications 1520 (which may alternatively be called software instances, virtual appliances, network functions, virtual nodes, virtual network functions, etc.) operative to implement some of the features, functions, and/or benefits of some of the embodiments disclosed herein. Applications 1520 are run in virtualization environment 1500 which provides hardware 1530 comprising processing circuitry 1560 and memory 1590. Memory 1590 contains instructions 1595 executable by processing circuitry 1560 whereby application 1520 is operative to provide one or more of the features, benefits, and/or functions disclosed herein.

Virtualization environment 1500, comprises general-purpose or special-purpose network hardware devices 1530 comprising a set of one or more processors or processing circuitry 1560, which may be commercial off-the-shelf (COTS) processors, dedicated Application Specific Integrated Circuits (ASICs), or any other type of processing circuitry including digital or analog hardware components or special purpose processors. Each hardware device may comprise memory 1590-1 which may be non-persistent memory for temporarily storing instructions 1595 or software executed by processing circuitry 1560. Each hardware device may comprise one or more network interface controllers (NICs) 1570, also known as network interface cards, which include physical network interface 1580. Each hardware device may also include non-transitory, persistent, machine-readable storage media 1590-2 having stored therein software 1595 and/or instructions executable by processing circuitry 1560. Software 1595 may include any type of software including software for instantiating one or more virtualization layers 1550 (also referred to as hypervisors), software to execute virtual machines 1540 as well as software allowing it to execute functions, features and/or benefits described in relation with some embodiments described herein.

Virtual machines 1540, comprise virtual processing, virtual memory, virtual networking or interface and virtual storage, and may be run by a corresponding virtualization layer 1550 or hypervisor. Different embodiments of the instance of virtual appliance 1520 may be implemented on one or more of virtual machines 1540, and the implementations may be made in different ways.

During operation, processing circuitry 1560 executes software 1595 to instantiate the hypervisor or virtualization layer 1550, which may sometimes be referred to as a virtual machine monitor (VMM). Virtualization layer 1550 may present a virtual operating platform that appears like networking hardware to virtual machine 1540.

As shown in Figure 15, hardware 1530 may be a standalone network node with generic or specific components. Hardware 1530 may comprise antenna 15225 and may implement some functions via virtualization. Alternatively, hardware 1530 may be part of a larger cluster of hardware (e.g. such as in a data center or customer premise equipment (CPE)) where many hardware nodes work together and are managed via management and orchestration (MANO) 15100, which, among others, oversees lifecycle management of applications 1520.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1540 may be a software implementation of a physical machine that runs programs as if they were executing on a physical, non-virtualized machine. Each of virtual machines 1540, and that part of hardware 1530 that executes that virtual machine, be it hardware dedicated to that virtual machine and/or hardware shared by that virtual machine with others of the virtual machines 1540, forms a separate virtual network elements (VNE).

Still in the context of NFV, Virtual Network Function (VNF) is responsible for handling specific network functions that run in one or more virtual machines 1540 on top of hardware networking infrastructure 1530 and corresponds to application 1520 in Figure 15.

In some embodiments, one or more radio units 15200 that each include one or more transmitters 15220 and one or more receivers 15210 may be coupled to one or more antennas 15225. Radio units 15200 may communicate directly with hardware nodes 1530 via one or more appropriate network interfaces and may be used in combination with the virtual components to provide a virtual node with radio capabilities, such as a radio access node or a base station.

In some embodiments, some signalling can be effected with the use of control system 15230 which may alternatively be used for communication between the hardware nodes 1530 and radio units 15200.

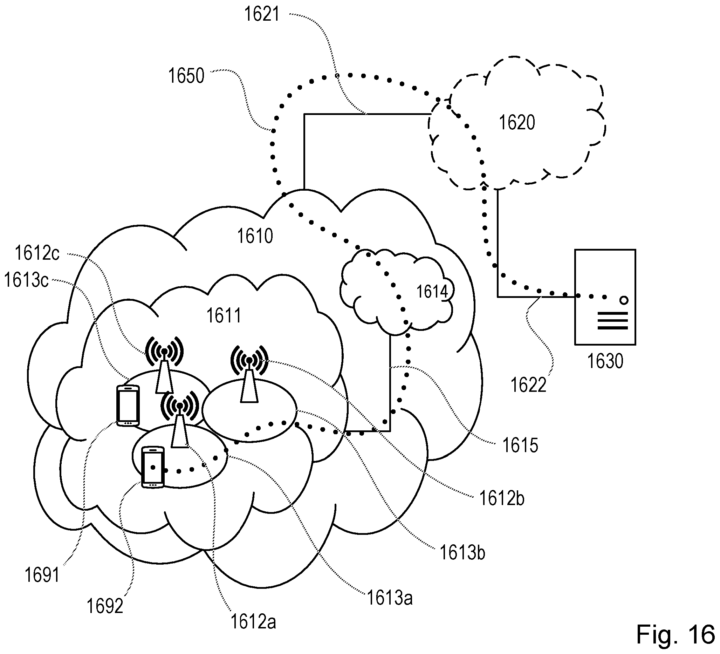

Figure 16 shows a telecommunication network connected via an intermediate network to a host computer in accordance with some embodiments. With reference to FIGURE 16, in accordance with an embodiment, a communication system includes telecommunication network 1610, such as a 3GPP-type cellular network, which comprises access network 1611, such as a radio access network, and core network 1614. Access network 1611 comprises a plurality of base stations 1612a, 1612b, 1612c, such as NBs, eNBs, gNBs or other types of wireless access points, each defining a corresponding coverage area 1613a, 1613b, 1613c. Each base station 1612a, 1612b, 1612c is connectable to core network 1614 over a wired or wireless connection 1615. A first UE 1691 located in coverage area 1613c is configured to wirelessly connect to, or be paged by, the corresponding base station 1612c. A second UE 1692 in coverage area 1613a is wirelessly connectable to the corresponding base station 1612a. While a plurality of UEs 1691, 1692 are illustrated in this example, the disclosed embodiments are equally applicable to a situation where a sole UE is in the coverage area or where a sole UE is connecting to the corresponding base station 1612.

Telecommunication network 1610 is itself connected to host computer 1630, which may be embodied in the hardware and/or software of a standalone server, a cloud-implemented server, a distributed server or as processing resources in a server farm. Host computer 1630 may be under the ownership or control of a service provider, or may be operated by the service provider or on behalf of the service provider. Connections 1621 and 1622 between telecommunication network 1610 and host computer 1630 may extend directly from core network 1614 to host computer 1630 or may go via an optional intermediate network 1620. Intermediate network 1620 may be one of, or a combination of more than one of, a public, private or hosted network; intermediate network 1620, if any, may be a backbone network or the Internet; in particular, intermediate network 1620 may comprise two or more sub-networks (not shown).

The communication system of Figure 16 as a whole enables connectivity between the connected UEs 1691, 1692 and host computer 1630. The connectivity may be described as an over-the-top (OTT) connection 1650. Host computer 1630 and the connected UEs 1691, 1692 are configured to communicate data and/or signalling via OTT connection 1650, using access network 1611, core network 1614, any intermediate network 1620 and possible further infrastructure (not shown) as intermediaries. OTT connection 1650 may be transparent in the sense that the participating communication devices through which OTT connection 1650 passes are unaware of routing of uplink and downlink communications. For example, base station 1612 may not or need not be informed about the past routing of an incoming downlink communication with data originating from host computer 1630 to be forwarded (e.g., handed over) to a connected UE 1691. Similarly, base station 1612 need not be aware of the future routing of an outgoing uplink communication originating from the UE 1691 towards the host computer 1630.

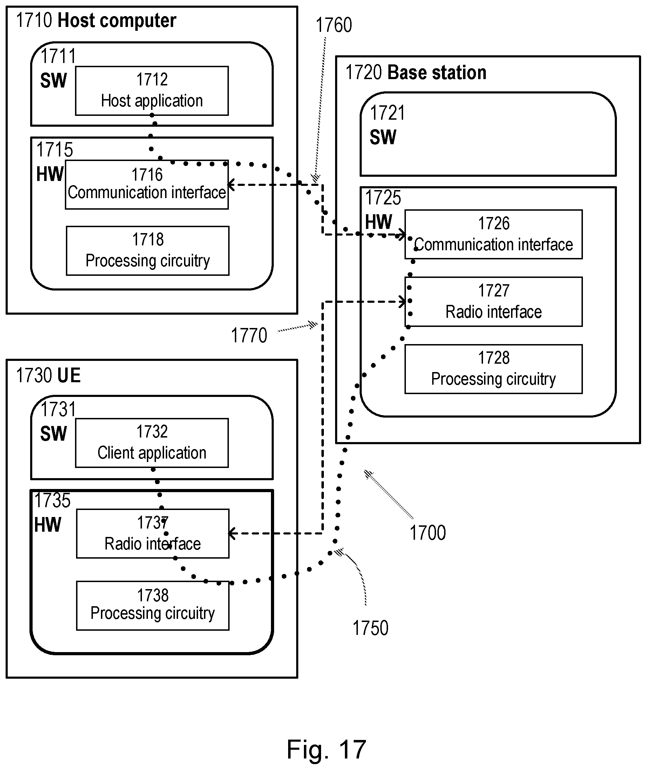

Figure 17 shows a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 17. In communication system 1700, host computer 1710 comprises hardware 1715 including communication interface 1716 configured to set up and maintain a wired or wireless connection with an interface of a different communication device of communication system 1700. Host computer 1710 further comprises processing circuitry 1718, which may have storage and/or processing capabilities. In particular, processing circuitry 1718 may comprise one or more programmable processors, application-specific integrated circuits, field programmable gate arrays or combinations of these (not shown) adapted to execute instructions. Host computer 1710 further comprises software 1711, which is stored in or accessible by host computer 1710 and executable by processing circuitry 1718. Software 1711 includes host application 1712. Host application 1712 may be operable to provide a service to a remote user, such as UE 1730 connecting via OTT connection 1750 terminating at UE 1730 and host computer 1710. In providing the service to the remote user, host application 1712 may provide user data which is transmitted using OTT connection 1750.

Communication system 1700 further includes base station 1720 provided in a telecommunication system and comprising hardware 1725 enabling it to communicate with host computer 1710 and with UE 1730. Hardware 1725 may include communication interface 1726 for setting up and maintaining a wired or wireless connection with an interface of a different communication device of communication system 1700, as well as radio interface 1727 for setting up and maintaining at least wireless connection 1770 with UE 1730 located in a coverage area (not shown in Figure 17) served by base station 1720. Communication interface 1726 may be configured to facilitate connection 1760 to host computer 1710. Connection 1760 may be direct or it may pass through a core network (not shown in Figure 17) of the telecommunication system and/or through one or more intermediate networks outside the telecommunication system. In the embodiment shown, hardware 1725 of base station 1720 further includes processing circuitry 1728, which may comprise one or more programmable processors, application-specific integrated circuits, field programmable gate arrays or combinations of these (not shown) adapted to execute instructions. Base station 1720 further has software 1721 stored internally or accessible via an external connection.

Communication system 1700 further includes UE 1730 already referred to. Its hardware 1735 may include radio interface 1737 configured to set up and maintain wireless connection 1770 with a base station serving a coverage area in which UE 1730 is currently located. Hardware 1735 of UE 1730 further includes processing circuitry 1738, which may comprise one or more programmable processors, application-specific integrated circuits, field programmable gate arrays or combinations of these (not shown) adapted to execute instructions. UE 1730 further comprises software 1731, which is stored in or accessible by UE 1730 and executable by processing circuitry 1738. Software 1731 includes client application 1732. Client application 1732 may be operable to provide a service to a human or non-human user via UE 1730, with the support of host computer 1710. In host computer 1710, an executing host application 1712 may communicate with the executing client application 1732 via OTT connection 1750 terminating at UE 1730 and host computer 1710. In providing the service to the user, client application 1732 may receive request data from host application 1712 and provide user data in response to the request data. OTT connection 1750 may transfer both the request data and the user data. Client application 1732 may interact with the user to generate the user data that it provides.

It is noted that host computer 1710, base station 1720 and UE 1730 illustrated in Figure 17 may be similar or identical to host computer 1630, one of base stations 1612a, 1612b, 1612c and one of UEs 1691, 1692 of Figure 16, respectively. This is to say, the inner workings of these entities may be as shown in Figure 17 and independently, the surrounding network topology may be that of Figure 16.

In Figure 17, OTT connection 1750 has been drawn abstractly to illustrate the communication between host computer 1710 and UE 1730 via base station 1720, without explicit reference to any intermediary devices and the precise routing of messages via these devices. Network infrastructure may determine the routing, which it may be configured to hide from UE 1730 or from the service provider operating host computer 1710, or both. While OTT connection 1750 is active, the network infrastructure may further take decisions by which it dynamically changes the routing (e.g., on the basis of load balancing consideration or reconfiguration of the network).

Wireless connection 1770 between UE 1730 and base station 1720 is in accordance with the teachings of the embodiments described throughout this disclosure. One or more of the various embodiments improve the performance of OTT services provided to UE 1730 using OTT connection 1750, in which wireless connection 1770 forms the last segment. More precisely, the teachings of these embodiments may improve the selection of target candidate cells in MR-DC operations, and thereby provide benefits such as improved data rate and reduced latency.

A measurement procedure may be provided for the purpose of monitoring data rate, latency and other factors on which the one or more embodiments improve. There may further be an optional network functionality for reconfiguring OTT connection 1750 between host computer 1710 and UE 1730, in response to variations in the measurement results. The measurement procedure and/or the network functionality for reconfiguring OTT connection 1750 may be implemented in software 1711 and hardware 1715 of host computer 1710 or in software 1731 and hardware 1735 of UE 1730, or both. In embodiments, sensors (not shown) may be deployed in or in association with communication devices through which OTT connection 1750 passes; the sensors may participate in the measurement procedure by supplying values of the monitored quantities exemplified above, or supplying values of other physical quantities from which software 1711, 1731 may compute or estimate the monitored quantities. The reconfiguring of OTT connection 1750 may include message format, retransmission settings, preferred routing etc.; the reconfiguring need not affect base station 1720, and it may be unknown or imperceptible to base station 1720. Such procedures and functionalities may be known and practiced in the art. In certain embodiments, measurements may involve proprietary UE signalling facilitating host computer 1710's measurements of throughput, propagation times, latency and the like. The measurements may be implemented in that software 1711 and 1731 causes messages to be transmitted, in particular empty or 'dummy' messages, using OTT connection 1750 while it monitors propagation times, errors etc.

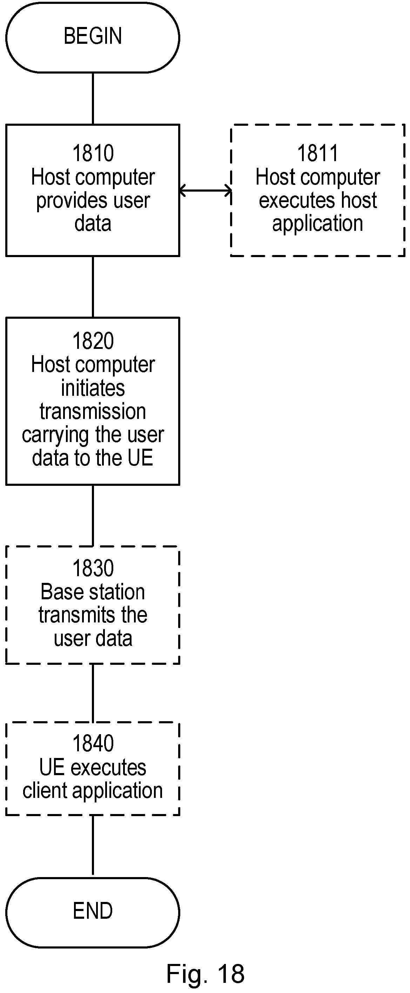

Figure 18 shows methods implemented in a communication system including a host computer, a base station and a user equipment in accordance with some embodiments.

Figure 18 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 18 will be included in this section. In step 1810, the host computer provides user data. In substep 1811 (which may be optional) of step 1810, the host computer provides the user data by executing a host application. In step 1820, the host computer initiates a transmission carrying the user data to the UE. In step 1830 (which may be optional), the base station transmits to the UE the user data which was carried in the transmission that the host computer initiated, in accordance with the teachings of the embodiments described throughout this disclosure. In step 1840 (which may also be optional), the UE executes a client application associated with the host application executed by the host computer.

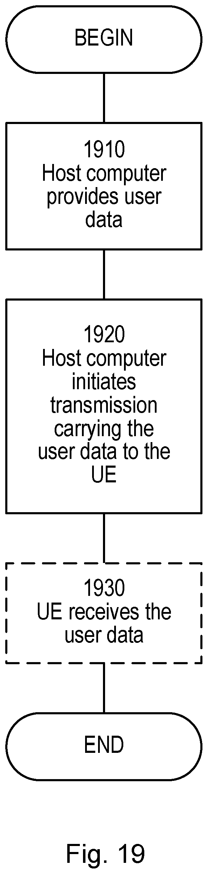

Figure 19 shows methods implemented in a communication system including a host computer, a base station and a user equipment in accordance with some embodiments.

Figure 19 is a flowchart illustrating a method implemented in a communication system, in accordance with one embodiment. The communication system includes a host computer, a base station and a UE which may be those described with reference to Figures 16 and17. For simplicity of the present disclosure, only drawing references to Figure 19 will be included in this section. In step 1910 of the method, the host computer provides user data. In an optional substep (not shown) the host computer provides the user data by executing a host application. In step 1920, the host computer initiates a transmission carrying the user data to the UE. The transmission may pass via the base station, in accordance with the teachings of the embodiments described throughout this disclosure. In step 1930 (which may be optional), the UE receives the user data carried in the transmission.

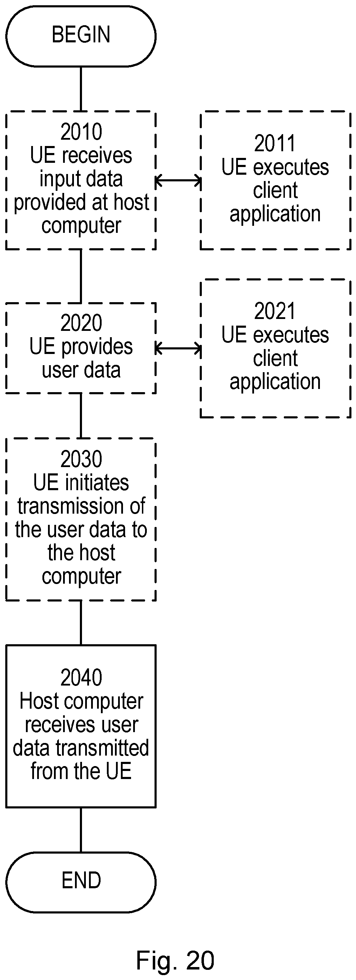

Figure 20 shows methods implemented in a communication system including a host computer, a base station and a user equipment in accordance with some embodiments.

Figure 20 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 20 will be included in this section. In step 2010 (which may be optional), the UE receives input data provided by the host computer. Additionally or alternatively, in step 2020, the UE provides user data. In substep 2021 (which may be optional) of step 2020, the UE provides the user data by executing a client application. In substep 2011 (which may be optional) of step 2010, the UE executes a client application which provides the user data in reaction to the received input data provided by the host computer. In providing the user data, the executed client application may further consider user input received from the user. Regardless of the specific manner in which the user data was provided, the UE initiates, in substep 2030 (which may be optional), transmission of the user data to the host computer. In step 2040 of the method, the host computer receives the user data transmitted from the UE, in accordance with the teachings of the embodiments described throughout this disclosure.

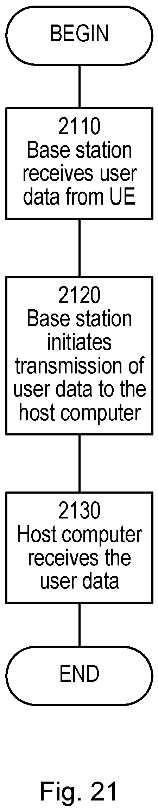

Figure 21 methods implemented in a communication system including a host computer, a base station and a user equipment in accordance with some embodiments.

Figure 21 is a flowchart illustrating a method implemented in a communication system, in accordance with one embodiment. The communication system includes a host computer, a base station and a UE which may be those described with reference to Figures 16 and 17. For simplicity of the present disclosure, only drawing references to Figure 21 will be included in this section. In step 2110 (which may be optional), in accordance with the teachings of the embodiments described throughout this disclosure, the base station receives user data from the UE. In step 2120 (which may be optional), the base station initiates transmission of the received user data to the host computer. In step 2130 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

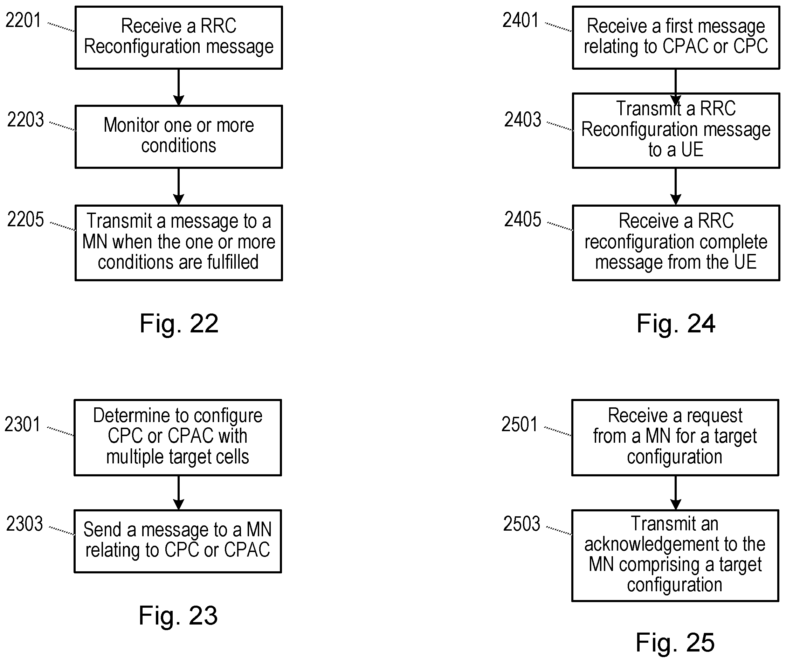

Figure 22 is a flow chart illustrating a method performed by a wireless device according to various embodiments. The method in Figure 22 can be performed by the wireless device shown in Figure 14. The wireless device is capable of operating according to- MR-DC.

In step 2201, the wireless device receives one or more RRC reconfiguration messages comprising at least one conditional configuration for a target candidate cell of a S-SN for the MR-DC, and at least one conditional configuration for a target candidate cell of a candidate T-SN, for the MR-DC.

In step 2203, the wireless device monitors one or more conditions. The conditions monitored in step 2203 can be the condition(s) for the target candidate cell of the S-SN and condition(s) for the target candidate cell of the T-SN indicated in the one or more received RRC reconfiguration messages.

In step 2205, the wireless device transmits a message to a MN when the one or more conditions are fulfilled.

In some embodiments, step 2203 can comprise monitoring at least two conditions. In this case, at least a first one of these conditions is associated with a target candidate cell of a S-SN, and at least a second one of these conditions is associated with a target candidate cell of a candidate T-SN.

In some embodiments, the one or more RRC reconfiguration messages received in step 2201 are received from the MN for the MR-DC.

In some embodiments, the one or more RRC reconfiguration messages received in step 2201 are for CPC or CPAC.

In some embodiments, the one or more RRC reconfiguration messages received in step 2201 are in MN format.

In alternative embodiments, the at least one conditional configuration for the target candidate cell of a S-SN is in a SN format, and the at least one conditional configuration for the target candidate cell of a candidate T-SN is in MN format.

In some embodiments, the one or more RRC reconfiguration messages received in step 2201 comprise the one or more conditions to be monitored.

In some embodiments, a first RRC reconfiguration message received in step 2201 comprises the at least one conditional configuration for a target candidate cell of a S-SN for the MR-DC, and a second RRC reconfiguration message received in step 2201 comprises the at least one conditional configuration for a target candidate cell of a candidate T-SN for the MR-DC. In these embodiments, the first RRC reconfiguration message and the second RRC reconfiguration message can be as described in any of the above embodiments, i.e. the messages can be received from the MN, one or both of the messages can be for CPC or CPAC, one or both of the messages can be in MN format, one message can be in SN format and the other message can be in MN format, and/or one or both of the messages can include the conditions to be monitored.

Figure 23 is a flow chart illustrating a method performed by a S-SN according to various embodiments. The method in Figure 23 can be performed by a virtual apparatus as shown in Figure 15.

In step 2301, the S-SN determines to configure CPC or CPAC with multiple target cells. At least one candidate target cell is of the S-SN and at least one candidate target cell is of a candidate T-SN.

In step 2303, the S-SN sends a message to a MN relating to CPC or CPAC.

In some embodiments, the method further comprises the S-SN obtaining capabilities of a wireless device, and determining that the wireless device is capable of being configured with intra-SN CPC and inter-SN CPC simultaneously.

In some embodiments, the message sent to the MN in step 2303 comprises measurements and/or a cell list for candidate target cells of the S-SN and candidate target cells of one or more candidate T-SNs.

In some embodiments, the message sent to the MN in step 2303 comprises a request to configure CPC. In these embodiments, the request sent in step 2303 can comprise information to enable the MN to request CPC towards one of the candidate T-SNs and to request the S-SN to configure CPC.

In some embodiments, the method further comprises the S-SN receiving a request from the MN for a target configuration for candidate target cells for CPAC.

In alternative embodiments, the message sent to the MN in step 2303 comprises an indication of CPC candidate target cells associated to the S-SN and a candidate T-SN. In these embodiments, the message sent to the MN in step 2303 can comprise, for each candidate target cell of the S-SN, a target candidate reconfiguration to be stored by the wireless device, an associated measurement identity, measlD, to be monitored and a SCG, measConfig for CPC related measConfig.

In some embodiments, the message sent to the MN in step 2303 is in SN format.

In embodiments where the message sent to the MN in step 2303 comprises a request to configure CPC, the request to configure CPC can be a request to configure CPC for a candidate T-SN that is merged with a CPC configuration for the S-SN.

In some embodiments, the message sent to the MN in step 2303 is a single message that comprises requests for intra-SN and inter-SN CPC.

In alternative embodiments, the message sent to the MN in step 2303 is a first request to prepare a CPAC for the at least one candidate target cell of the S-SN, and the method further comprises sending a second request to the MN to prepare a CPAC for the at least one candidate target cell of the candidate T-SN.

Figure 24 is a flow chart illustrating a method performed by a MN according to various embodiments. The method in Figure 24 can be performed by a virtual apparatus as shown in Figure 15.

In step 2401, the MN receives a first message from a S-SN relating to CPAC or CPC.

In step 2403, the MN transmits one or more RRC reconfiguration messages to a wireless device. The one or more RRC reconfiguration messages comprise at least one conditional configuration for a target candidate cell of a S-SN for the MR-DC, and at least one conditional configuration for a target candidate cell of a candidate T-SN for the MR-DC.

In step 2405 the MN receives a RRC reconfiguration complete message from the wireless device indicating that a conditional reconfiguration is complete.

In some embodiments, the method further comprises the MN transmitting a request to a SN for a target configuration for one or more candidate target cells for CPAC or CPC, and receiving a second message from an SN, the second message comprising a target configuration.

In these embodiments, the request transmitted by the MN can be sent to one of the S-SN and a SN other than the S-SN. The request is for a target configuration for candidate target cells for CPAC.

In these embodiments, the method can further comprise transmitting a second request to the other one of the S-SN and the SN other than the S-SN. The second request is a request for a target configuration for candidate target cells for CPAC.

In some embodiments, the first message received in step 2401 is for configuration of CPC for multiple target cells, and at least one candidate target cell is of the S-SN and at least one candidate target cell is of a candidate T-SN.

In some embodiments, the method further comprises generating a CPC configuration for all candidate target cells to send in the RRC reconfiguration message. In these embodiments, the CPC can be in MN format.

In alternative embodiments, the first message received in step 2401 can comprise a CPC configuration in SN format. In these embodiments, the method can further comprise receiving a second message from the S-SN comprising a request for CPC associated to target candidate cells in a candidate T-SN. In these embodiments, the received second message can comprise information to enable the MN to request CPC towards the candidate T-SN. Alternatively, the received first message can comprise a request for intra-SN and inter-SN CPC.

In some embodiments, the method further comprises transmitting a request to an SN other than the S-SN for a target configuration for candidate target cells for CPC. In these embodiments, the received first message can comprise, for each candidate target cell of the S-SN, a target candidate reconfiguration to be stored by the wireless device, an associated measurement identity, measID, to be monitored and a SCG, measConfig for CPC related measConfig.

In some embodiments, the first message received in step 2401 comprises information enabling the MN to request CPC towards one of the candidate T-SNs.

In some embodiments, the first message received in step 2401 comprises a request for intra-SN and inter-SN CPC.

In some embodiments, the RRC reconfiguration message transmitted in step 2403 comprises a CPAC configuration for all candidate target cells.

In alternative embodiments, the first message received in step 2401 comprises a request to prepare a CPAC for target candidate cells in the S-SN. In these embodiments, the method can further comprise receiving a second message from the S-SN comprising a request to prepare CPAC for target candidate cells in a candidate T-SN. In these embodiments, a first transmitted RRC reconfiguration message can comprise the at least one conditional configuration for a target candidate cell of a S-SN for the MR-DC, and a second transmitted RRC reconfiguration message can comprise the at least one conditional configuration for a target candidate cell of a candidate T-SN for the MR-DC.

Figure 25 is a flow chart illustrating a method performed by a T-SN according to various embodiments. The method in Figure 25 can be performed by a virtual apparatus as shown in Figure 15.

In step 2501, the T-SN receives a request from a MN for a target configuration for one or more candidate target cells for CPAC. Then, in step 2503, the T-SN transmits an acknowledgement to the MN, with the acknowledgement comprising target configuration for one or more candidate target cells for CPAC.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| | | | |
|---|---|---|---|
| 5GC or 5GCN | 5G core network | NAS | Non Access Stratum |
| ACK | Acknowledgement | NG-RAN | Next Generation Radio Access Network |
| AGC | Automatic Gain Control | | |
| AMF | Access and Mobility management Function | Ng-eNB | Next Generation Evolved Node B |
| AP | Application Protocol | PDCP | Packet Data Convergence Protocol |
| BSR | Buffer Status Report | | |
| BWP | Bandwidth Part | PCI | Physical Cell Identity |
| CE | Control Element | PHR | Power headroom report |
| CHO | Conditional Handover | PSCell | Primary Secondary Cell (in LTE) or Primary SCG Cell (in NR) |
| CN | Core Network | | |
| CPA | Conditional PSCell Addition | RB | Radio Bearer |
| CPAC | Conditional PSCell Addition/Change | RLC | Radio Link Control |
| | | RLF | Radio Link Failure |
| CPC | Conditional PSCell Change | SCG | Secondary Cell Group |
| CP | Control Plane | SCTP | Stream Control Transmission Protocol |
| CQI | Channel Quality Indicator | | |
| C-RNTI | Cell Radio Network Temporary Identifier | SeNB | Secondary eNB |
| | | SgNB | Secondary gNB |
| CSI | Channel State Information | SINR | Signal to Interference plus Noise Ratio |
| DC | Dual Connectivity | | |
| DCI | Downlink Control Information | SN | Secondary Node |
| DL | Downlink | SR | Scheduling Request |
| DRB | Data Radio Bearer | SRB | Signaling Radio Bearer |
| EN-DC | E-UTRAN-NR Dual Connectivity | S-SN | Source Secondary Node |
| E-RAB | EUTRAN Radio Access Bearer | SUL | Supplementary uplink |
| E-UTRA | Evolved Universal Terrestrial Radio Access | SpCell | Special Cell, the primary cell of a master or secondary cell group |
| E-UTRAN | Evolved Universal Terrestrial Radio Access Network | TEID | Tunnel Endpoint IDentifier |
| | | TNL | Transport Network Layer |
| FDD | Frequency Division Duplex | T-SN | Target Secondary Node |
| FR1 | Frequency Range 1 | UCI | Uplink Control Information |
| FR2 | Frequency Range 2 | UDP | User Datagram Protocol |
| gNB | NR base station | UPF | User Plane Function |
| GTP-U | GPRS Tunneling Protocol - User Plane | UL-SCH | Uplink Shared Channel |
| | | UP | User Plane |
| IE | Information Element | URLLC | Ultra Reliable Low Latency Communication |
| IP | Internet Protocol | | |
| MC | Multi-connectivity | X2 | Interface between base stations |
| MCG | Master Cell Group | | |
| MAC CE | MAC Control Element | 1x RTT | CDMA2000 1x Radio Transmission Technology |
| MeNB | Master eNB | | |
| MgNB | Master gNB | 3GPP | 3rd Generation Partnership Project |
| MN | Master Node | | |
| MR-DC | Multi-Radio Dual Connectivity | 5G | 5th Generation |
| NACK | Negative Acknowledgement | ABS | Almost Blank Subframe |
| ARQ | Automatic Repeat Request | | service Single Frequency Network |
| AWGN | Additive White Gaussian Noise | | |
| BCCH | Broadcast Control Channel | MBSFN ABS | MBSFN Almost Blank Subframe |
| BCH | Broadcast Channel | MDT | Minimization of Drive Tests |
| CA | Carrier Aggregation | MIB | Master Information Block |
| CC | Carrier Component | MME | Mobility Management Entity |
| CCCH SDU | Common Control Channel SDU | MSC | Mobile Switching Center |
| CDMA | Code Division Multiplexing Access | NPDCCH | Narrowband Physical Downlink Control Channel |
| CGI | Cell Global Identifier | NR | New Radio |
| CIR | Channel Impulse Response | OCNG | OFDMA Channel Noise Generator |
| CPICH | Common Pilot Channel | | |
| CPICH Ec/No | CPICH Received energy per chip divided by the power | OFDM | Orthogonal Frequency Division Multiplexing |
| | density in the band | OFDMA | Orthogonal Frequency Division Multiple Access |
| DCCH | Dedicated Control Channel | | |
| DM | Demodulation | OSS | Operations Support System |
| DMRS | Demodulation Reference Signal | OTDOA | Observed Time Difference of Arrival |
| DRX | Discontinuous Reception | | |
| DTX | Discontinuous Transmission | O&M | Operation and Maintenance |
| DTCH | Dedicated Traffic Channel | PBCH | Physical Broadcast Channel |
| DUT | Device Under Test | P-CCPCH | Primary Common Control Physical Channel |
| E-CID | Enhanced Cell-ID (positioning method) | | |
| | | PCell | Primary Cell |
| E-SMLC | Evolved-Serving Mobile Location Centre | PCFICH | Physical Control Format Indicator Channel |
| ECGI | Evolved CGI | PDCCH | Physical Downlink Control Channel |
| eNB | E-UTRAN NodeB/base station | | |
| ePDCCH | enhanced Physical Downlink Control Channel | PDP | Profile Delay Profile |
| | | PDSCH | Physical Downlink Shared Channel |
| E-SMLC | evolved Serving Mobile Location Center | | |
| | | PGW | Packet Gateway |
| FFS | For Further Study | PHICH | Physical Hybrid-ARQ Indicator Channel |
| GERAN | GSM EDGE Radio Access Network | | |
| | | PLMN | Public Land Mobile Network |
| GNSS | Global Navigation Satellite System | PMI | Precoder Matrix Indicator |
| | | PRACH | Physical Random Access Channel |
| GSM | Global System for Mobile communication | | |
| | | PRS | Positioning Reference Signal |
| HARQ | Hybrid Automatic Repeat Request | PSS | Primary Synchronization Signal |
| | | PUCCH | Physical Uplink Control Channel |
| HO | Handover | PUSCH | Physical Uplink Shared Channel |
| HSPA | High Speed Packet Access | RACH | Random Access Channel |
| HRPD | High Rate Packet Data | QAM | Quadrature Amplitude Modulation |
| LOS | Line of Sight | | |
| LPP | LTE Positioning Protocol | RAN | Radio Access Network |
| LTE | Long-Term Evolution | RAT | Radio Access Technology |
| MAC | Medium Access Control | RLM | Radio Link Management |
| MBMS | Multimedia Broadcast Multicast Services | RNC | Radio Network Controller |
| | | RNTI | Radio Network Temporary Identifier |
| MBSFN | Multimedia Broadcast multicast | | |
| RRC | Radio Resource Control | SON | Self Optimized Network |
| RRM | Radio Resource Management | SS | Synchronization Signal |
| RS | Reference Signal | SSS | Secondary Synchronization Signal |
| RSCP | Received Signal Code Power | | |
| RSRP | Reference Symbol Received Power OR | TDD | Time Division Duplex |
| | | TDOA | Time Difference of Arrival |
| | Reference Signal Received Power | TOA | Time of Arrival |
| | | TSS | Tertiary Synchronization Signal |
| RSRQ | Reference Signal Received Quality OR | TTI | Transmission Time Interval |
| | | UE | User Equipment |
| | Reference Symbol Received Quality | UL | Uplink |
| | | UMTS | Universal Mobile Telecommunication System |
| RSSI | Received Signal Strength Indicator | | |
| | | USIM | Universal Subscriber Identity Module |
| RSTD | Reference Signal Time Difference | | |
| | | UTDOA | Uplink Time Difference of Arrival |
| SCH | Synchronization Channel | UTRA | Universal Terrestrial Radio Access |
| SCell | Secondary Cell | | |
| SDU | Service Data Unit | UTRAN | Universal Terrestrial Radio Access Network |
| SFN | System Frame Number | | |
| SGW | Serving Gateway | WCDMA | Wide CDMA |
| SI | System Information | WLAN | Wide Local Area Network |
| SIB | System Information Block | | |
| SNR | Signal to Noise Ratio | | |

## Claims

1. A method performed by a wireless device capable of operating according to Multi-Radio Dual Connectivity, MR-DC, such that the UE is configured with a Master Cell Group (MCG), controlled by the Master Node (MN), and configured with a Secondary Cell Group (SCG) controlled by a Source Secondary Node (S-SN), the method comprising:
- receiving (2201) one or more Radio Resource Control, RRC, reconfiguration messages comprising at least one conditional configuration generated by the MN for a target candidate cell of a candidate Target Secondary Node, T-SN, for the MR-DC and an embedded *RRCReconfiguration* message generated by the S-SN, said embedded *RRCReconfiguration* message comprising at least one conditional configuration for a target candidate cell of said S-SN, for the Multi-Radio Dual Connectivity, MR-DC, wherein the one or more RRC reconfiguration messages are for Conditional PSCell Change, CPC;
- monitoring (2203) one or more conditions; and
- transmitting (2205) a message to a Master Node, MN, when the one or more conditions are fulfilled.

2. A method as claimed in claim 1, wherein at least one RRC reconfiguration message is in MN format.

3. A method as claimed in any of claims 1-2, wherein the one or more RRC reconfiguration messages comprise the one or more conditions to be monitored.

4. A method as claimed in any of claims 1-3, wherein a first received RRC reconfiguration message comprises the at least one conditional configuration for a target candidate cell of a S-SN for the MR-DC, and wherein a second RRC reconfiguration message comprises the at least one conditional configuration for a target candidate cell of a candidate T-SN for the MR-DC.

5. A method performed by a Source Secondary Node, S-SN, the method comprising:
- determining (2301) to configure Conditional PSCell Change, CPC, or Conditional PSCell Addition/Change, CPAC, with multiple target cells, wherein at least one candidate target cell is of the S-SN and at least one candidate target cell is of a candidate Target Secondary Node, T-SN; and sending (2303) a first message to a Master Node, MN, said first message comprising at least one Conditional PSCell Change, CPC, configuration for a target candidate cell of said S-SN in an *RRCReconfiguration* message generated by the S-SN,
- sending, to the MN, in said first message or in a second message, a request for Conditional PSCell Change, CPC, associated to a target candidate cell in a candidate T-SN.

6. A method as claimed in claim 5, wherein the first message sent to the MN comprises measurements and/or a cell list for candidate target cells of the S-SN and candidate target cells of one or more candidate T-SNs.

7. A method as claimed in claim 5, wherein the first message sent to the MN comprises an indication of CPC candidate target cells associated to the S-SN and a candidate T-SN.

8. A method as claimed in any of claims 5-7, wherein the request to configure CPC is a request to configure CPC for a candidate T-SN, that is merged with a CPC configuration for the S-SN.

9. A method as claimed in any of claims 5-8, wherein the first message is a single message that comprises requests for intra-SN and inter-SN CPC.

10. A method as claimed in claim 5, wherein the first message to the MN is a first request to prepare a CPC for the at least one candidate target cell of the S-SN; wherein the method further comprises sending a second request to the MN to prepare a CPC for the at least one candidate target cell of the candidate T-SN.

11. A method performed by a Master Node, MN, the method comprising:
- receiving (2401) a first message from a Source Secondary Node, S-SN, relating to Conditional PSCell Change, CPC wherein the received first message is for configuration of Conditional PSCell Change, CPC, for multiple target cells, wherein at least one candidate target cell is of the S-SN, and wherein the received first message comprises at least one Conditional PSCell Change, CPC, configuration for a target candidate cell of said S-SN in an *RRCReconfiguration* message generated by the S-SN,
- receiving, from the S-SN, in said first message or in a second message from the S-SN, a request for Conditional PSCell Change, CPC, associated to a target candidate cell in a candidate T-SN;
- transmitting a request to the candidate T-SN for a target configuration for one or more candidate target cells for CPAC or CPC; and
- receiving a message from the candidate T-SN, the message from the candidate T-SN comprising a target configuration;
- transmitting (2403) one or more Radio Resource Control, RRC, reconfiguration messages to a wireless device, the one or more RRC reconfiguration messages comprising at least one conditional configuration generated by the MN for a target candidate cell of a candidate Target Secondary Node, T-SN for the MR-DC and an embedded *RRCReconfiguration* message generated by the S-SN, said embedded *RRCReconfiguration* message comprising at least one conditional configuration for a target candidate cell of a S-SN, for the Multi-Radio Dual Connectivity, MR-DC;
- receiving (2405) a RRC reconfiguration complete message from the wireless device indicating that a conditional reconfiguration is complete.

12. A method as claimed in claim 11, wherein the request is sent to one of the S-SN and a SN other than the S-SN, and wherein the request is for a target configuration for candidate target cells for CPC.

13. A method as claimed in any of claims 11-12, wherein the method further comprises:
generating a Conditional PSCell Change, CPC, configuration for all candidate target cells to send in the RRC reconfiguration message.

14. A method as claimed in claim 11, wherein the method further comprises:
receiving a second message from the S-SN comprising a request for Conditional PSCell Change, CPC, associated to target candidate cells in a candidate T-SN.

15. A wireless device configured to operate according to Multi-Radio Dual Connectivity, MR-DC, such that the UE is configured with a Master Cell Group (MCG), controlled by the Master Node (MN), and configured with a Secondary Cell Group (SCG) controlled by a Source Secondary Node (S-SN); the wireless device configured to:
- receive one or more Radio Resource Control, RRC, reconfiguration messages comprising at least one conditional configuration generated by the MN for a target candidate cell of a candidate Target Secondary Node, T-SN, for the MR-DC, and an embedded *RRCReconfiguration* message generated by the S-SN, said embedded *RRCReconfiguration* message comprising at least one conditional configuration for a target candidate cell of said S-SN, for the Multi-Radio Dual Connectivity, MR-DC, wherein the one or more RRC reconfiguration messages are for Conditional PSCell Change, CPC;
- monitor one or more conditions; and
- transmit a message to a Master Node, MN, when the one or more conditions are fulfilled.

16. A wireless device as claimed in claim 15, being further configured to perform operations corresponding to any of the methods of claims 2-4.

17. A Source Secondary Node, S-SN, the S-SN configured to:
- determine to configure Conditional PSCell Change, CPC, with multiple target cells, wherein at least one candidate target cell is of the S-SN and at least one candidate target cell is of a candidate Target Secondary Node, T-SN; and
- send a first message to a Master Node, MN, relating to CPC or CPAC, said first message comprising at least one a Conditional PSCell Change, CPC, configuration for a target candidate cell of said S-SN in an *RRCReconfiguration* message generated by the S-SN,
- sending, to the MN, in said first message or in a second message, a request for Conditional PSCell Change, CPC, associated to a target candidate cell in a candidate T-SN.

18. A S-SN as claimed in claim 17, wherein the S-SN is further configured to perform operations corresponding to any of the methods of claims 6-10.

19. A Master Node, MN, the MN configured to:
- receive a first message from a Source Secondary Node, S-SN, relating Conditional PSCell Change, CPC, wherein the received first message is for configuration of Conditional PSCell Change, CPC, for multiple target cells, wherein at least one candidate target cell is of the S-SN, and wherein the received first message comprises at least one Conditional PSCell Change, CPC, configuration for a target candidate cell of said S-SN in an *RRCReconfiguration* message generated by the S-SN,
- receive, from the S-SN, in said first message or in a second message from the S-SN, a request for Conditional PSCell Change, CPC, associated to a target candidate cell in a candidate T-SN;
- transmit a request to the candidate T-SN for a target configuration for one or more candidate target cells for CPAC or CPC; and
- receive a message from the candidate T-SN, the message from the candidate T-SN comprising a target configuration;
- transmit one or more Radio Resource Control, RRC, reconfiguration messages to a wireless device, the one or more RRC reconfiguration messages comprising at least one conditional configuration generated by the MN for a target candidate cell of a candidate Target Secondary Node, T-SN for the MR-DC and an embedded *RRCReconfiguration* message generated by the S-SN, said embedded *RRCReconfiguration* message comprising at least one conditional configuration for a target candidate cell of a S-SN, for the Multi-Radio Dual Connectivity, MR-DC; and
- receive a RRC reconfiguration complete message from the wireless device indicating that a conditional reconfiguration is complete.

20. A MN as claimed in claim 19, wherein the MN is further configured to perform operations corresponding to any of the methods of claims 12-14.

## Patentansprüche

1. Verfahren, das von einer drahtlosen Vorrichtung durchgeführt wird, die zum Betreiben gemäß Mehrfachfunk-Dual-Konnektivität, MR-DC, derart in der Lage ist, dass das UE mit einer Master-Zellengruppe (MCG) konfiguriert ist, die von dem Masterknoten (MN) gesteuert wird, und mit einer Sekundärzellengruppe (SCG) konfiguriert ist, die von einem Quellsekundärknoten (S-SN) gesteuert wird, wobei das Verfahren Folgendes umfasst:
- Empfangen (2201) einer oder mehrerer Rekonfigurationsnachrichten zur Funkressourcensteuerung, RRC-Rekonfigurationsnachrichten, die mindestens eine bedingte Konfiguration, die von dem MN für eine Zielkandidatenzelle eines Kandidaten-Zielsekundärknotens, T-SN, für die MR-DC erzeugt wurde, und eine eingebettete *RRCReconfiguration-Nachricht,* die von dem S-SN erzeugt wurde, umfassen, wobei die eingebettete *RRCReconfiguration-Nachricht* mindestens eine bedingte Konfiguration für eine Zielkandidatenzelle des S-SN für die Mehrfachfunk-Dual-Konnektivität, MR-DC, umfasst, wobei die eine oder die mehreren RRC-Rekonfigurationsnachrichten zu einem bedingten PSCell-Wechsel, CPC, dienen;
- Überwachen (2203) einer oder mehrerer Bedingungen; und
- Übertragen (2205) einer Nachricht an einen Masterknoten, MN, wenn die eine oder die mehreren Bedingungen erfüllt sind.

2. Verfahren nach Anspruch 1, wobei mindestens eine RRC-Rekonfigurationsnachricht im MN-Format vorliegt.

3. Verfahren nach einem der Ansprüche 1-2, wobei die eine oder die mehreren RRC-Rekonfigurationsnachrichten die eine oder die mehreren Bedingungen umfassen, die zu überwachen sind.

4. Verfahren nach einem der Ansprüche 1-3, wobei eine erste empfangene RRC-Rekonfigurationsnachricht die mindestens eine bedingte Konfiguration für eine Zielkandidatenzelle eines S-SN für die MR-DC umfasst und wobei eine zweite RRC-Rekonfigurationsnachricht die mindestens eine bedingte Konfiguration für eine Zielkandidatenzelle eines Kandidaten-T-SN für die MR-DC umfasst.

5. Verfahren, das von einem Quellsekundärknoten, S-SN, durchgeführt wird, wobei das Verfahren Folgendes umfasst:
- Bestimmen (2301) zum Konfigurieren eines bedingten PSCell-Wechsels, CPC, oder einer/s bedingten PSCell-Hinzufügung/-Wechsels, CPAC, mit mehreren Zielzellen, wobei mindestens eine Kandidatenzielzelle zu dem S-SN gehört und mindestens eine Kandidatenzielzelle zu einem Kandidaten-Zielsekundärknoten, T-SN, gehört; und Senden (2303) einer ersten Nachricht an einen Masterknoten, MN, wobei die erste Nachricht mindestens eine Konfiguration zum bedingten PSCell-Wechsel, CPC-Konfiguration, für eine Zielkandidatenzelle des S-SN in einer *RRCReconfiguration-Nachricht* umfasst, die von dem S-SN erzeugt wurde,
- Senden, an den MN, in der ersten Nachricht oder in einer zweiten Nachricht, einer Aufforderung zu einem bedingten PSCell-Wechsel, CPC, in Verbindung mit einer Zielkandidatenzelle in einem Kandidaten-T-SN.

6. Verfahren nach Anspruch 5, wobei die erste Nachricht, die an den MN gesendet wird, Messungen und/oder eine Zellenliste für Kandidatenzielzellen des S-SN und Kandidatenzielzellen eines oder mehrerer Kandidaten-T-SN umfasst.

7. Verfahren nach Anspruch 5, wobei die erste Nachricht, die an den MN gesendet wird, eine Angabe von CPC-Kandidatenzielzellen in Verbindung mit dem S-SN und einem Kandidaten-T-SN umfasst.

8. Verfahren nach einem der Ansprüche 5-7, wobei die Aufforderung zum Konfigurieren des CPC eine Aufforderung zum Konfigurieren des CPC für einen Kandidaten-T-SN ist, die mit einer CPC-Konfiguration für den S-SN verschmolzen ist.

9. Verfahren nach einem der Ansprüche 5-8, wobei die erste Nachricht eine einzelne Nachricht ist, die Aufforderungen zum Intra-SN- und Inter-SN-CPC umfasst.

10. Verfahren nach Anspruch 5, wobei die erste Nachricht an den MN eine erste Aufforderung zum Vorbereiten eines CPC für die mindestens eine Kandidatenzielzelle des S-SN ist; wobei das Verfahren ferner Folgendes umfasst:
Senden einer zweiten Aufforderung an den MN zum Vorbereiten eines CPC für die mindestens eine Kandidatenzielzelle des Kandidaten-T-SN.

11. Verfahren, das von einem Masterknoten, MN, durchgeführt wird, wobei das Verfahren Folgendes umfasst:
- Empfangen (2401) einer ersten Nachricht von einem Quellsekundärknoten, S-SN, in Bezug auf einen bedingten PSCell-Wechsel, CPC, wobei die empfangene erste Nachricht zur Konfiguration eines bedingten PSCell-Wechsels, CPC, für mehrere Zielzellen dient, wobei mindestens eine Kandidatenzielzelle zu dem S-SN gehört und wobei die empfangene erste Nachricht mindestens eine Konfiguration zum bedingten PSCell-Wechsel, CPC-Konfiguration, für eine Zielkandidatenzelle des S-SN in einer *RRCReconfiguration-Nachricht* umfasst, die von dem S-SN erzeugt wurde,
- Empfangen, von dem S-SN, in der ersten Nachricht oder in einer zweiten Nachricht von dem S-SN, einer Aufforderung zum bedingten PSCell-Wechsel, CPC, in Verbindung mit einer Zielkandidatenzelle in einem Kandidaten-T-SN;
- Übertragen einer Aufforderung zu einer Zielkonfiguration für eine oder mehrere Kandidatenzielzellen zur/zum CPAC oder CPC an den Kandidaten-T-SN; und
- Empfangen einer Nachricht von dem Kandidaten-T-SN, wobei die Nachricht von dem Kandidaten-T-SN eine Zielkonfiguration umfasst;
- Übertragen (2403) einer oder mehrerer Rekonfigurationsnachrichten zur Funkressourcensteuerung, RRC-Rekonfigurationsnachrichten, an eine drahtlose Vorrichtung, wobei die eine oder die mehreren RRC-Rekonfigurationsnachrichten mindestens eine bedingte Konfiguration, die von dem MN für eine Zielkandidatenzelle eines Kandidaten-Zielsekundärknotens, T-SN, für die MR-DC erzeugt wurde, und eine eingebettete *RRCReconfiguration-Nachricht,* die von dem S-SN erzeugt wurde, umfassen, wobei die eingebettete *RRCReconfiguration-Nachricht* mindestens eine bedingte Konfiguration für eine Zielkandidatenzelle eines S-SN für die Mehrfachfunk-Dual-Konnektivität, MR-DC, umfasst;
- Empfangen (2405) einer RRC-Rekonfigurationsabschluss-Nachricht von der drahtlosen Vorrichtung, die angibt, dass eine bedingte Rekonfiguration abgeschlossen ist.

12. Verfahren nach Anspruch 11, wobei die Aufforderung an einen von dem S-SN und einem anderen SN als dem S-SN gesendet wird und wobei die Aufforderung zu einer Zielkonfiguration für Kandidatenzielzellen zum CPC dient.

13. Verfahren nach einem der Ansprüche 11-12, wobei das Verfahren ferner Folgendes umfasst:
Erzeugen einer Konfiguration zum bedingten PSCell-Wechsel, CPC-Konfiguration, für alle Kandidatenzielzellen zum Senden in der RRC-Rekonfigurationsnachricht.

14. Verfahren nach Anspruch 11, wobei das Verfahren ferner Folgendes umfasst:
Empfangen einer zweiten Nachricht von dem S-SN, die eine Aufforderung zum bedingten PSCell-Wechsel, CPC, in Verbindung mit Zielkandidatenzellen in einem Kandidaten-T-SN umfasst.

15. Drahtlose Vorrichtung, die zum Betreiben gemäß Mehrfachfunk-Dual-Konnektivität, MR-DC, derart konfiguriert ist, dass das UE mit einer Master-Zellengruppe (MCG) konfiguriert ist, die von dem Masterknoten (MN) gesteuert wird, und mit einer Sekundärzellengruppe (SCG) konfiguriert ist, die von einem Quellsekundärknoten (S-SN) gesteuert wird; wobei die drahtlose Vorrichtung zu Folgendem konfiguriert ist:
- Empfangen einer oder mehrerer Rekonfigurationsnachrichten zur Funkressourcensteuerung, RRC-Rekonfigurationsnachrichten, die mindestens eine bedingte Konfiguration, die von dem MN für eine Zielkandidatenzelle eines Kandidaten-Zielsekundärknotens, T-SN, für die MR-DC erzeugt wurde, und eine eingebettete *RRCReconfiguration-Nachricht,* die von dem S-SN erzeugt wurde, umfassen, wobei die eingebettete *RRCReconfiguration-Nachricht* mindestens eine bedingte Konfiguration für eine Zielkandidatenzelle des S-SN für die Mehrfachfunk-Dual-Konnektivität, MR-DC, umfasst, wobei die eine oder die mehreren RRC-Rekonfigurationsnachrichten zu einem bedingten PSCell-Wechsel, CPC, dienen;
- Überwachen einer oder mehrerer Bedingungen; und
- Übertragen einer Nachricht an einen Masterknoten, MN, wenn die eine oder die mehreren Bedingungen erfüllt sind.

16. Drahtlose Vorrichtung nach Anspruch 15, die ferner dazu konfiguriert ist, Vorgänge durchzuführen, die einem der Verfahren nach Anspruch 2-4 entsprechen.

17. Quellsekundärknoten, S-SN, wobei der S-SN zu Folgendem konfiguriert ist:
- Bestimmen zum Konfigurieren eines bedingten PSCell-Wechsels, CPC, mit mehreren Zielzellen, wobei mindestens eine Kandidatenzielzelle zu dem S-SN gehört und mindestens eine Kandidatenzielzelle zu einem Kandidaten-Zielsekundärknoten, T-SN, gehört; und
- Senden einer ersten Nachricht an einen Masterknoten, MN, in Bezug auf CPC oder CPAC, wobei die erste Nachricht mindestens eine Konfiguration zum bedingten PSCell-Wechsel, CPC-Konfiguration, für eine Zielkandidatenzelle des S-SN in einer *RRCReconfiguration-Nachricht* umfasst, die von dem S-SN erzeugt wurde,
- Senden, an den MN, in der ersten Nachricht oder in einer zweiten Nachricht, einer Aufforderung zum bedingten PSCell-Wechsel, CPC, in Verbindung mit einer Zielkandidatenzelle in einem Kandidaten-T-SN.

18. S-SN nach Anspruch 17, wobei der S-SN ferner dazu konfiguriert ist, Vorgänge durchzuführen, die einem der Verfahren nach Anspruch 6-10 entsprechen.

19. Masterknoten, MN, wobei der MN zu Folgendem konfiguriert ist:
- Empfangen einer ersten Nachricht von einem Quellsekundärknoten, S-SN, in Bezug auf einen bedingten PSCell-Wechsel, CPC, wobei die empfangene erste Nachricht zur Konfiguration eines bedingten PSCell-Wechsels, CPC, für mehrere Zielzellen dient, wobei mindestens eine Kandidatenzielzelle zu dem S-SN gehört und wobei die empfangene erste Nachricht mindestens eine Konfiguration zum bedingten PSCell-Wechsel, CPC-Konfiguration, für eine Zielkandidatenzelle des S-SN in einer *RRCReconfiguration-Nachricht* umfasst, die von dem S-SN erzeugt wurde,
- Empfangen, von dem S-SN, in der ersten Nachricht oder in einer zweiten Nachricht von dem S-SN, einer Aufforderung zum bedingten PSCell-Wechsel, CPC, in Verbindung mit einer Zielkandidatenzelle in einem Kandidaten-T-SN;
- Übertragen einer Aufforderung zu einer Zielkonfiguration für eine oder mehrere Kandidatenzielzellen zur/zum CPAC oder CPC an den Kandidaten-T-SN; und
- Empfangen einer Nachricht von dem Kandidaten-T-SN, wobei die Nachricht von dem Kandidaten-T-SN eine Zielkonfiguration umfasst;
- Übertragen einer oder mehrerer Rekonfigurationsnachrichten zur Funkressourcensteuerung, RRC-Rekonfigurationsnachrichten, an eine drahtlose Vorrichtung, wobei die eine oder die mehreren RRC-Rekonfigurationsnachrichten mindestens eine bedingte Konfiguration, die von dem MN für eine Zielkandidatenzelle eines Kandidaten-Zielsekundärknotens, T-SN, für die MR-DC erzeugt wurde, und eine eingebettete *RRCReconfiguration-Nachricht,* die von dem S-SN erzeugt wurde, umfassen, wobei die eingebettete *RRCReconfiguration-Nachricht* mindestens eine bedingte Konfiguration für eine Zielkandidatenzelle eines S-SN für die Mehrfachfunk-Dual-Konnektivität, MR-DC, umfasst; und
- Empfangen einer RRC-Rekonfigurationsabschluss-Nachricht von der drahtlosen Vorrichtung, die angibt, dass eine bedingte Rekonfiguration abgeschlossen ist.

20. MN nach Anspruch 19, wobei der MN ferner dazu konfiguriert ist, Vorgänge durchzuführen, die einem der Verfahren nach Anspruch 12-14 entsprechen.

## Revendications

1. Procédé mis en œuvre par un dispositif sans fil capable de fonctionner selon la double connectivité multi-radio (MR-DC), de sorte que l'UE soit configuré avec un groupe de cellules maîtres (MCG), commandé par le nœud maître (MN), et configuré avec un groupe de cellules secondaires (SCG), commandé par un nœud secondaire source (S-SN), le procédé comprenant :
- la réception (2201) d'un ou plusieurs messages de reconfiguration de commande de ressource radio (RRC) comprenant au moins une configuration conditionnelle générée par le MN pour une cellule candidate cible d'un nœud secondaire cible (T-SN) candidat pour la MR-DC, et un message de reconfiguration de RRC intégré généré par le S-SN, ledit message de reconfiguration de RRC intégré comprenant au moins une configuration conditionnelle pour une cellule candidate cible dudit S-SN, pour la double connectivité multi-radio (MR-DC), dans lequel les un ou plusieurs messages de reconfiguration de RRC sont destinés au changement conditionnel de PSCell (CPC) ;
- la surveillance (2203) d'une ou plusieurs conditions ; et
- la transmission (2205) d'un message à un nœud maître (MN) lorsque les une ou plusieurs conditions sont remplies.

2. Procédé selon la revendication 1, dans lequel au moins un message de reconfiguration de RRC est au format de MN.

3. Procédé selon l'une quelconque des revendications 1 et 2, dans lequel les un ou plusieurs messages de reconfiguration de RRC comprennent les une ou plusieurs conditions à surveiller.

4. Procédé selon l'une quelconque des revendications 1 à 3, dans lequel un premier message de reconfiguration de RRC reçu comprend l'au moins une configuration conditionnelle pour une cellule candidate cible d'un S-SN pour la MR-DC, et dans lequel un second message de reconfiguration de RRC comprend l'au moins une configuration conditionnelle pour une cellule candidate cible d'un T-SN candidat pour la MR-DC.

5. Procédé mis en œuvre par un nœud secondaire source (S-SN), comprenant :
- la détermination (2301) pour configurer un changement conditionnel de PSCell (CPC) ou d'un ajout/changement conditionnel de PSCell (CPAC) avec plusieurs cellules cibles, dans lequel au moins une cellule cible candidate appartient au S-SN et au moins une cellule cible candidate appartient à un nœud secondaire cible (T-SN) candidat ; et l'envoi (2303) d'un premier message à un nœud maître (MN), ledit premier message comprenant au moins une configuration de changement conditionnel de PSCell (CPC) pour une cellule candidate cible dudit S-SN dans un message de reconfiguration de RRC généré par le S-SN ;
- l'envoi au MN, dans ledit premier message ou dans un second message, d'une demande de changement conditionnel de PSCell (CPC) associée à une cellule candidate cible dans un T-SN candidat.

6. Procédé selon la revendication 5, dans lequel le premier message envoyé au MN comprend des mesures et/ou une liste de cellules pour des cellules cibles candidates du S-SN et des cellules cibles candidates des un ou plusieurs T-SN candidats.

7. Procédé selon la revendication 5, dans lequel le premier message envoyé au MN comprend une indication de cellules cibles candidates de CPC associées au S-SN et à un T-SN candidat.

8. Procédé selon l'une quelconque des revendications 5 à 7, dans lequel la demande de configuration de CPC est une demande de configuration de CPC pour un T-SN candidat, fusionnée avec une configuration de CPC pour le S-SN.

9. Procédé selon l'une quelconque des revendications 5 à 8, dans lequel le premier message est un message unique comprenant des demandes de CPC intra-SN et inter-SN.

10. Procédé selon la revendication 5, dans lequel le premier message envoyé au MN est une première demande de préparation d'un CPC pour l'une ou plusieurs cellule cible candidate du S-SN ; dans lequel le procédé comprend en outre
l'envoi d'une seconde demande au MN pour préparer un CPC pour l'une ou plusieurs cellule cible candidate du T-SN candidat.

11. Procédé exécuté par un nœud maître (MN), comprenant :
- la réception (2401) d'un premier message à partir d'un nœud secondaire source (S-SN) relatif à un changement conditionnel de PSCell (CPC), dans lequel le premier message reçu est destiné à une configuration d'un changement conditionnel de PSCell (CPC) pour de multiples cellules cibles, dans lequel au moins une cellule cible candidate appartient au S-SN, et dans lequel le premier message reçu comprend au moins une configuration de changement conditionnel de PSCell (CPC) pour une cellule candidate cible dudit S-SN dans un message de reconfiguration de RRC généré par le S-SN,
- la réception, à partir du S-SN, dans ledit premier message ou dans un second message à partir du S-SN, d'une demande de changement conditionnel de PSCell (CPC) associée à une cellule candidate cible dans un T-SN candidat ;
- la transmission d'une demande de configuration cible au T-SN candidat pour une ou plusieurs cellules cibles candidates pour un CPAC ou un CPC ; et
- la réception d'un message à partir du T-SN candidat, le message provenant du T-SN candidat comprenant une configuration cible ; - la transmission (2403) d'un ou plusieurs messages de reconfiguration de commande de ressource radio (RRC) à un dispositif sans fil, les un ou plusieurs messages de reconfiguration de RRC comprenant au moins une configuration conditionnelle générée par le MN pour une cellule candidate cible d'un nœud secondaire cible (T-SN) candidat pour la MR-DC, et d'un message de reconfiguration de RRC intégré généré par le S-SN, ledit message de reconfiguration de RRC intégré comprenant au moins une configuration conditionnelle pour une cellule candidate cible d'un S-SN, pour la double connectivité multi-radio (MR-DC) ;
- la réception (2405) d'un message complet de reconfiguration de RRC provenant du dispositif sans fil, indiquant qu'une reconfiguration conditionnelle est complète.

12. Procédé selon la revendication 11, dans lequel la demande est envoyée à un élément parmi le S-SN ou à un SN autre que le S-SN, et dans lequel la demande est destinée à une configuration cible pour des cellules cibles candidates pour un CPC.

13. Procédé selon l'une quelconque des revendications 11 et 12, dans lequel le procédé comprend en outre :
la génération d'une configuration de changement conditionnel de PSCell (CPC) pour toutes les cellules cibles candidates, afin d'envoyer le message de reconfiguration de RRC.

14. Procédé selon la revendication 11, dans lequel le procédé comprend en outre :
la réception d'un second message à partir du S-SN comprenant une demande de changement conditionnel de PSCell (CPC) associée aux cellules cibles candidates dans un T-SN candidat.

15. Dispositif sans fil configuré pour fonctionner selon la double connectivité multi-radio (MR-DC), de sorte que l'UE soit configuré avec un groupe de cellules maîtres (MCG), commandé par le nœud maître (MN), et configuré avec un groupe de cellules secondaires (SCG) commandé par un nœud secondaire source (S-SN), le dispositif sans fil configuré pour :
- recevoir un ou plusieurs messages de reconfiguration de commande de ressource radio (RRC) comprenant au moins une configuration conditionnelle générée par le MN pour une cellule candidate cible d'un nœud secondaire cible (T-SN) candidat pour la MR-DC, et un message de reconfiguration de RRC intégré généré par le S-SN, ledit message de reconfiguration de RRC intégré comprenant au moins une configuration conditionnelle pour une cellule candidate cible dudit S-SN, pour la double connectivité multi-radio, MR-DC, dans lequel les un ou plusieurs messages de reconfiguration de RRC sont destinés au changement conditionnel de PSCell (CPC) ;
- surveiller une ou plusieurs conditions ; et
- transmettre un message à un nœud maître (MN) lorsque les une ou plusieurs conditions sont remplies.

16. Dispositif sans fil selon la revendication 15, étant configuré pour mettre en œuvre des opérations correspondant à l'un quelconque des procédés des revendications 2 à 4.

17. Nœud secondaire source (S-SN), le S-SN configuré pour :
- déterminer pour configurer un changement conditionnel de PSCell (CPC) avec plusieurs cellules cibles, dans lequel au moins une cellule cible candidate appartient au S-SN et au moins une cellule cible candidate appartient à un nœud secondaire cible (T-SN) candidat ; et
- envoyer un premier message à un nœud maître (MN) relatif à un CPC ou à un CPAC, ledit premier message comprenant au moins une configuration de changement conditionnel de PSCell (CPC) pour une cellule cible candidate dudit S-SN dans un message de reconfiguration de RRC généré par le S-SN ;
- envoyer au MN, dans ledit premier message ou dans un second message, une demande de changement conditionnel de PSCell (CPC) associée à une cellule cible candidate dans un T-SN candidat.

18. S-SN selon la revendication 17, dans lequel le S-SN est en outre configuré pour mettre en œuvre des opérations correspondant à l'un quelconque des procédés des revendications 6 à 10.

19. Nœud maître (MN), le MN configuré pour :
- recevoir un premier message à partir d'un nœud secondaire source (S-SN) relatif à un changement conditionnel de PSCell (CPC), dans lequel le premier message reçu est destiné à une configuration d'un changement conditionnel de PSCell (CPC) pour plusieurs cellules cibles, dans lequel au moins une cellule cible candidate appartient au S-SN, et dans lequel le premier message reçu comprend au moins une configuration de changement conditionnel de PSCell (CPC) pour une cellule candidate cible dudit S-SN dans un message de reconfiguration de RRC généré par le S-SN,
- recevoir à partir du S-SN, dans ledit premier message ou dans un second message provenant du S-SN, une demande de changement conditionnel de PSCell (CPC) associée à une cellule candidate cible dans un T-SN candidat ;
- transmettre une demande au T-SN candidat pour une configuration cible d'une ou plusieurs cellules cibles candidates pour un CPAC ou un CPC ; et
- recevoir un message à partir du T-SN candidat, le message provenant du T-SN candidat comprenant une configuration cible ;
- transmettre un ou plusieurs messages de reconfiguration de commande de ressource radio (RRC) à un dispositif sans fil, les un ou plusieurs messages de reconfiguration de RRC comprenant au moins une configuration conditionnelle générée par le MN pour une cellule cible candidate d'un nœud secondaire cible (T-SN) candidat pour la MR-DC, et un message de reconfiguration de RRC intégré généré par le S-SN, ledit message de reconfiguration de RRC intégré comprenant au moins une configuration conditionnelle pour une cellule cible candidate d'un S-SN, pour la double connectivité multi-radio (MR-DC) ; et
- recevoir un message de reconfiguration de RRC complet à partir du dispositif sans fil indiquant qu'une reconfiguration conditionnelle est complète.

20. MN selon la revendication 19, dans lequel le MN est en outre configuré pour mettre en œuvre des opérations correspondant à l'un quelconque des procédés des revendications 12 à 14.
